# EUROPÄISCHE PATENTANMELDUNG

(11) **EP 4 212 758 A1**
(43) Veröffentlichungstag der Anmeldung: **19.07.2023**
(21) Anmeldenummer: 22151356.7
(22) Anmeldetag: 13.01.2022
(51) Int. Cl.: F16G 3/00

(54) **BEFESTIGUNGSGERÄT UND VERFAHREN ZUM BEFESTIGEN EINES GURTVERBINDERS AN EINEM GURTBANDENDE EINES TRANSPORTGURTS**

(71) Anmelder: MATO GmbH & Co. KG, 63165 Mühlheim am Main (DE)
(72) Erfinder: Friess, Michael, 63456 Hanau-Steinheim (DE); Wilk, Thomas, 63165 Mühlheim a.M. (DE)
(74) Vertreter: Franke, Markus

(57) **Zusammenfassung**

Die vorliegende Erfindung betrifft ein Befestigungsgerät (1) zum Befestigen von Gurtverbindern an einem Gurtbandende eines Transportgurts mittels Befestigungskrampen. Ferner betrifft die Erfindung ein Verfahren zum Befestigen eines Gurtverbinders an einem Gurtbandende eines Transportgurts unter Verwendung des erfindungsgemäßen Befestigungsgeräts (1). Das Befestigungsgerät (1) weist einen Einpressstempel (25) zum Einpressen der Befestigungskrampe (9), eine Umformmatrize (20) mit einer Umbiegestruktur (30) zum Umbiegen von freien Enden (11) der Befestigungskrampe (9) und einen dem Einpressstempel (25) gegenüberliegenden Anpressstempel (26) zum Anpressen der umgebogenen freien Enden (11) der Befestigungskrampe (9) auf.

## Beschreibung

Die vorliegende Erfindung betrifft ein Befestigungsgerät zum Befestigen von Gurtverbindern an einem Gurtbandende eines Transportgurts mittels Befestigungskrampen. Ferner betrifft die Erfindung ein Verfahren zum Befestigen eines Gurtverbinders an einem Gurtbandende eines Transportgurts unter Verwendung des erfindungsgemäßen Befestigungsgeräts.

Aus dem Stand der Technik ist es bekannt, zwecks Herstellens einer Endlosverbindung und/oder dem Verbinden von Transportgurten Gurtverbinder zu verwenden. Derartige Gurtverbinder weisen zumindest ein Verbinderelement mit zwei gegenüberliegenden Schenkeln auf, wobei die Schenkel in der Regel über einen Bogenabschnitt miteinander verbunden sind und zwischen den beiden Schenkeln das Gurtbandende angeordnet wird. In der Regel weisen die beiden Schenkel Durchgangslöcher für Befestigungsmittel, beispielsweise für eine oder mehrere Befestigungskrampen, auf, wobei zwecks Befestigung des Verbinderelements an dem Gurtbandende die Befestigungskrampe durch die Durchgangslöcher der beiden Schenkel unter Durchdringung des zwischen den beiden Schenkeln angeordneten Gurtbandendes hindurchgetrieben wird und die austretenden freien Enden der Befestigungskrampe umgebogen werden, wobei die Umbiegung derart erfolgt, dass die beiden freien Enden der Krampe in ihrer Endposition möglichst weit umgebogen sind und vorzugsweise an den Schenkel, an dem sie austreten, zur Anlage kommen. Dementsprechend werden diese freien Enden möglichst weit, vorzugsweise um zumindest 80° bis 100°, vorzugsweise 90°, umgebogen und an den Schenkel angepresst.

Zwecks Befestigung eines Gurtverbinders an einem Gurtbandende eines Transportgurts sind aus dem Stand der Technik diverse Befestigungsgeräte bzw. Vorrichtungen bekannt. Bei diesen Befestigungsgeräten erfolgt das Befestigen der Verbinderelemente mittels der Befestigungskrampe in zwei Schritten. In einem ersten Schritt wird die in dem ersten Schenkel gelagerte Befestigungskrampe unter Krafteinwirkung auf einen Krampenrücken, der die zwei freien Enden der Befestigungskrampe verbindet, unter Durchdringung der Schenkel und des zwischen diesen gelagerten Gurtbandendes eingepresst werden, wobei die an dem zweiten Schenkel austretenden freien Ende der Befestigungskrampe an einem Biegegesenk in eine Zwischenzustand umgebogen werden. In einem weiteren Verfahrensschritt werden die umgebogenen freien Enden in ihre finale Endposition überführt, nämlich an den zweiten Schenkel angepresst.

Beispielsweise ist aus der WO 2013/103577 A1 ein Werkzeug zum Befestigen eines Gurtverbinders an einem Transportgurt offenbart, wobei dieses Werkzeug einen plattenförmigen Körper mit einem Biegegesenkabschnitt und einem ebenen Abschnitt aufweist und das Befestigen des Verbinders unter Verwendung eines Hammers erfolgt. Die voreingesetzten Befestigungskrampen werden mittels des Hammers derart eingetrieben, dass die austretenden freien Enden der Befestigungskrampen in der Kontur des Biegegesenks in eine Zwischenposition vorgebogen werden. Im Anschluss daran, wird das Werkzeug derart positioniert, dass die in die Zwischenposition vorgebogenen freien Enden der Befestigungskrampe an der ebenen Fläche des Werkzeugs zur Anlage kommen und unter Krafteinwirkung an dieser ebenen Fläche in ihre finale Endposition umgebogen werden, in denen die freien Enden der jeweiligen Befestigungskrampe in Lagertaschen des jeweiligen Verbinderelements zur Anlage kommen. Die Umbiegung der freien Enden der jeweiligen Befestigungskrampe erfolgt dabei derart, dass die freien Enden der jeweiligen Befestigungskrampe aufeinander zu und zueinander versetzt umgebogen werden. Problematisch bei einem derartigen Werkzeug ist, dass das Resultat stark abhängig ist von dem Verwender des Werkzeugs, sodass die Ergebnisse stark abhängig davon sind, wie sorgfältig der Verwender gearbeitet hat. Eine weitere Problematik besteht darin, dass unter Verwendung eines derartigen Werkzeugs es nicht möglich ist, in ein und derselben Position des Werkzeugs die Befestigungskrampe bzw. die freien Enden der jeweiligen Befestigungskrampe in die finale Position zu überführen.

Um das Setzen von Befestigungskrampen zu erleichtern, ist es aus dem Stand der Technik auch bekannt, Umformmatrizen mit zwei unterschiedlichen Biegegesenken zu verwenden, wobei die Biegegesenke nebeneinander angeordnet sind, wobei das eine Biegegesenk dazu eingerichtet ist, die freien Enden der Befestigungskrampe in eine Zwischenposition zu überführen und das andere Biegegesenk dazu eingerichtet ist, eine benachbarte Befestigungskrampe in eine finale Position zu überführen. Ein derartiges Befestigungsgerät ist beispielsweise in der DE 195 13 483 C2 offenbart. Ferner offenbart die US 4 789 092 A ein derartiges Befestigungsgerät. Nachteilig bei derartigen Befestigungsgeräten ist, dass nicht in ein und derselben Position des Werkzeugs die Befestigungskrampe in die finale Position überführt werden kann. Es ist notwendig, das Befestigungsgerät entlang des Gurtbandendes weiterzuführen, um die jeweilige Befestigungskrampe in die finale Position zu überführen. In ein und derselben Position des Werkzeugs kann bei derartigen Werkzeugen nicht die finale Position der Befestigungskrampe erreicht werden.

Aufgabe der vorliegenden Erfindung ist es, ein Befestigungsgerät zu schaffen, dass ein Anbringen der Gurtverbinder an dem Gurtbandende mittels Befestigungskrampen besonders schnell und reproduzierbar ermöglicht. Ferner ist es Aufgabe der vorliegenden Erfindung, ein verbessertes Verfahren zum Befestigen von Gurtverbindern anzugeben.

Diese Aufgaben werden durch ein Befestigungsgerät, das die Merkmale des Patentanspruchs 1 aufweist und durch die vorteilhaften Ausführungsformen der Erfindung gelöst. Ferner wird die Aufgabe durch ein Verfahren gelöst, das die Merkmale des Patentanspruchs 15 aufweist.

Bei dem Befestigungsgerät handelt es sich um ein Gerät zum Befestigen eines Gurtverbinders an einem Gurtbandende eines Transportgurts mittels Befestigungskrampen, wobei der Gurtverbinder zumindest ein Verbinderelement mit einem ersten Schenkel und einem zweiten Schenkel aufweist, wobei das Befestigungsgerät einen Einpressstempel aufweist, zum Einpressen der Befestigungskrampe, eine Umformmatrize mit einer Umbiegestruktur aufweist, zum Umbiegen von beim Einpressen der Befestigungskrampe an dem zweiten Schenkel austretenden freien Enden der Befestigungskrampe an der Umbiegestruktur in Richtung des zweiten Schenkels, und einen dem Einpressstempel gegenüberliegenden Anpressstempel aufweist, zum Anpressen der an der Umbiegestruktur umgebogenen freien Enden der Befestigungskrampe, wobei der Einpressstempel von einer Ausgangsposition in eine Endposition verfahrbar ist zum Einpressen einer Befestigungskrampe in die Schenkel, wobei der Anpressstempel von einer Ausgangsposition in eine Endposition verfahrbar ist, zum Anpressen der umgebogenen freien Enden an den zweiten Schenkel, wobei die Umformmatrize eine Durchgangsöffnung für den Anpressstempel aufweist.

Durch die Verwendung eines verfahrbaren Einpressstempels und eines verfahrbaren Anpressstempels ist eine hohe Präzision beim Setzen der Befestigungskrampe gewährleistet. Die Durchgangsöffnung in der Umformmatrize ermöglicht es dem Anpressstempel die Umformmatrize zu Durchdringen, um auf die umgebogenen freien Enden einzuwirken, die auf einer dem Einpressstempel zugewandten Vorderseite der Umformmatrize angeordnet sind. Es ist daher nicht notwendig, die Position der Umformmatrize zu ändern, um die freien Enden anzupressen. Dadurch wird Zeit eingespart.

Durch die erfindungsgemäße Lösung können der Einpressstempel und der Anpressstempel derart angeordnet sein, dass diese in ein und derselben Position des Geräts bezüglich des Gurtbandendes auf dieselbe Befestigungskrampe oder dieselben Befestigungskrampen einwirken. Dadurch wird die Gefahr eines Positionierungsfehlers ausgeschlossen, da das initiale Einpressen der Befestigungskrampe und das finale Anpressen der freien Enden der Befestigungskrampe in ein und derselben Position des Geräts erfolgen kann bzw. erfolgt. Eine solche Gestaltung hat auch den Vorteil, dass die Verbinderelemente nicht notwendigerweise der Reihe nach befestigt werden müssen, um den Gurtverbinder an dem Gurtbandende zu befestigen. Bei den aus dem Stand der Technik bekannten Befestigungsgeräten ist üblicherweise vorgesehen, dass entlang des Gurtbandendes nacheinander, insofern der Reihe nach, die Verbinderelemente mittels Befestigungskrampen befestigt werden. Dies hat insbesondere bei besonders breiten Gurtbandenden den Nachteil, dass es aufgrund des Arbeitens von links nach rechts bzw. von rechts nach links dazu kommen kann, dass Gurtmaterial wellenartig aufgeschoben wird, insbesondere wenn beim Setzen der Verbinderelemente das Gurtbandende zwischen den Schenkeln der Verbinderelemente komprimiert wird. Durch Aufschieben von Material können zudem noch nicht befestigte Verbinderelemente hinsichtlich Ihrer Ausrichtung zum Gurtbandende verschoben werden und durch aufgeschobenes Material kann es auch zu einer Ablenkung der freien Enden der Befestigungskrampen beim Einpressen kommen.

Unter einer Befestigungskrampe wird insbesondere ein Befestigungsmittel verstanden, das zwei in dieselbe Richtung weisende freie Schenkel bzw. freie Enden, häufig auch als Krampenspitzen bezeichnet, aufweist und einen diese beiden freien Enden verbindenden Krampenrücken aufweist. Vorzugsweise sind die freien Enden im Ausganszustand, somit vor dem Setzen der Befestigungskrampe bzw. Umbiegen und Anpressen der freien Enden, in einem Winkel von 90° zu dem Krampenrücken gebogen. Die freien Enden der Befestigungskrampe können durchaus an ihrem jeweiligen Ende angespitzt sein, um das Eindringen bzw. Durchdringen des Gurtbandendes zu erleichtern. Vorzugsweise wirkt der Einpressstempel auf den Krampenrücken der Befestigungskrampen ein.

Vorzugsweise weisen die Schenkel der Verbinderelemente Durchgangslöcher für die jeweilige Befestigungskrampe auf. Dadurch wird ein Durchdringen der Schenkel beim Einpressen der Befestigungskrampe erleichtert oder erst ermöglicht.

Die Befestigungskrampe und/oder die Verbinderelemente bestehen vorzugsweise aus Metall oder einer Metalllegierung, bspw. aus verzinktem Stahl oder Edelstahl.

Als besonders vorteilhaft wird es angesehen, wenn der Gurtverbinder bereits mit Befestigungskrampen bestückt ist, beispielsweise die Befestigungskrampen bereits in den Durchgangslöchern eines Schenkels des jeweiligen Verbinderelements eingebracht und in diesen Durchgangslöchern gehalten ist, bspw. in Art einer Presspassung. Insofern ist es nicht notwendig, des Befestigungsgeräts separate Befestigungskrampen zuzuführen.

Als besonders vorteilhaft wird es angesehen, wenn der zweite Schenkel des Verbinderelements an dem die freien Enden der Befestigungskrampe austreten, eine Lagertasche zur Aufnahme der angepressten freien Enden aufweist. Vorzugsweise ist die Lagertasche derart gestaltet, dass die angepressten freien Enden nicht gegenüber dem zweiten Schenkel hervorstehen. Es ist durchaus denkbar, dass der erste Schenkel, an dem der Krampenrücken zur Anlage kommt, eine entsprechende Lagertasche für den Krampenrücken aufweist, vorzugsweise derart, dass der Krampenrücken in nicht gegenüber dem ersten Schenkel hervorsteht.

Vorzugsweise sind die Befestigungskrampen derart angeordnet, dass sich die Krampenrücken der Befestigungskrampen parallel zu dem Gurtbandende erstrecken.

Vorzugsweise weist der Gurtverbinder mehrere in Reihe angeordnete Verbinderelemente auf, wobei sich diese Verbinderelemente entlang des Gurtbandendes erstrecken. Insbesondere weist der Gurtverbinder genau vier oder mehr als vier, besonders bevorzugt mehr als zwanzig in Reihe angeordnete Verbinderelemente auf.

Ferner wird es als besonders vorteilhaft angesehen, wenn benachbarte Verbinder im Bereich der Schenkel miteinander verbunden sind, an denen die freien Enden der Befestigungskrampe austreten. Die anderen Schenkel der Verbinderelemente sind unverbunden. Dies hat den Vorteil, dass dann diese Schenkel ohne Beeinflussung der Schenkel der benachbarten Verbinderelemente geschlossen werden können, zwecks Anlage dieser Schenkel an dem Gurtbandende.

Vorzugsweise ist die Umformmatrize zwischen dem Anpressstempel und dem Einpressstempel angeordnet.

Die Durchgangsöffnung kann durchaus dadurch gebildet sein, dass die Umformmatrize zweiteilig ausgebildet ist und die beiden Teile voneinander beabstandet angeordnet sind. Der freie Bereich zwischen den Teilen bildet dann die Durchgangsöffnung.

Vorzugsweise ist die Durchgangsöffnung als Bohrung ausgebildet. Eine solche Durchgangsöffnung kann einfach und kostengünstig hergestellt werden.

Vorzugsweise ist die Durchgangsöffnung derart ausgebildet, dass diese eine Führung für den in der Durchgangsöffnung verfahrbaren Anpressstempel bildet. Dadurch wird eine besonders hohe Präzision beim Anpressen der freien Enden mittels des Anpressstempels erreicht.

In einer Ausführungsform des Befestigungsgeräts ist vorgesehen, dass die Umformmatrize von einer Ausgangsposition in eine Endposition verfahrbar ist zum Umbiegen der beim Einpressen der Befestigungskrampe austretenden freien Enden der Befestigungskrampe. Vorzugsweise ist die Umformmatrize dabei in der Ausgangsposition von den austretenden freien Enden beabstandet. Somit findet beim Einpressen noch kein Umbiegen der freien Enden statt. Bei einer verfahrbaren Umformmatrize wird es als vorteilhaft angesehen, wenn die Umformmatrize vorlaufend zu dem Anpressstempel und in Verfahrrichtung des Anpressstempels verschiebbar an dem Anpressstempel gelagert ist. Dadurch wirkt beim Verfahren des Anpressstempels in die Endposition zunächst die Umformmatrize auf die freien Enden ein und biegt diese in Richtung des zweiten Schenkels um. Nachfolgend zu der Umformmatrize wirkt dann der Anpressstempel auf die umgebogenen freien Enden ein und presst diese an den zweiten Schenkel an. Vorzugsweis erfolgt das Verschieben der Umformmatrize in Richtung des Anpressstempel entgegen der Rückstellkraft eines Rückstellmittels. Die Rückstellkraft ist dabei vorzugsweise so zu wählen, dass die Rückstellkraft ausreichend hoch ist, um zuverlässig ein ausreichendes Umbiegen der freien Enden vor dem Einwirken des Anpressstempels zu bewirken.

In einer anderen Ausführungsform ist die Umformmatrize stationär ausgebildet, somit nicht in Richtung der freien Enden verfahrbar zwecks Umbiegen der freien Enden. Dementsprechend ist die Umformmatrize derart angeordnet, dass die freien Enden beim Einpressen der Befestigungskrampe mittels des Einpressstempels gegen die Umbiegestruktur der stationären Umformmatrize gepresst und dadurch in Richtung des zweiten Schenkels umgebogen werden.

In einer besonders bevorzugten Ausführungsform ist vorgesehen, dass der Anpressstempel beim Vorgang des Anpressens auf die Spitzen der freien Enden einwirkt. Dadurch werden die in der Regel scharfen Spitzen zuverlässig angepresst.

Als besonders vorteilhaft wird es ferner angesehen, wenn die Umbiegestruktur und die zugehörige Durchgangsöffnung derart ausgebildet sind, dass die umgebogenen freien Enden der Befestigungskrampe vor dem Anpressen in die Durchgangsöffnung hineinragen.

Als besonders vorteilhaft wird es angesehen, wenn die Umbiegestruktur derart gestalte ist, dass die freien Enden an der Umbiegestruktur um 20° bis 60° umgebogen werden. Vorzugsweise sind die freien Enden bzw. freien Schenkel nach dem Anpressen um einen Winkel von 85° bis 95° umgebogen.

Es wird als vorteilhaft angesehen, wenn der Anpressstempel eine auf die freien Enden einwirkende Anpressfläche aufweist, wobei diese Anpressfläche nach außen, insofern konvex, gewölbt ist. Durch die Wölbung kann ein Materialabrieb an den freien Enden beim Einwirken des Anpressstempels minimiert werden. Durch eine Wölbung wird zudem vermieden, dass Grate und sonstige unerwünschte Verformungen oder Materialabschälungen an den freien Enden auftreten. Grundsätzlich könnte die Anpressfläche aber auch eben bzw. plan sein. Dadurch ist der Anpressstempel einfach herstellbar und universell einsetzbar.

In einigen Anwendungsfällen kann es aber auch vorteilhaft sein, wenn die Anpressfläche eine Strukturierung aufweist, um ein gezieltes Umbiegen der umgebogenen freien Enden beim Anpressen zu erreichen, bspw. die Strukturierung die Biegebewegung der vorgebogenen freien Enden bei Anpressen leitet. Durch eine solche Strukturierung kann beispielsweise vermieden werden, dass die vorgebogenen freien Enden beim finalen Anpressen übereinander zur Anlage kommen, was unerwünscht ist. Beispielsweise kann die Anpressfläche einen Steg aufweisen, der beim Anpressen zwischen die vorgebogenen freien Enden einfährt und auf diese Weise auf Abstand hält. Ferner kann durch eine Strukturierung vermieden werden, dass Material von den freien Enden abgetragen wird, Grate und sonstige unerwünschte Verformungen oder Materialabschälungen an den freien Enden auftreten.

An die Anpressfläche angrenzende Außenkanten des Anpressstempels sind vorzugsweise mit einem Radius versehen bzw. verrundet oder abgekantet.

Es ist durchaus denkbar, dass dem jeweiligen freien Ende eine eigene Durchgangsöffnung der Umformmatrize und ein eigener Anpressstempel zugeordnet ist. Vorzugsweise ist allerdings den beiden freien Enden einer Befestigungskrampe dieselbe Durchgangsöffnung und derselbe Einpressstempel zugeordnet.

Vorzugsweise ist der Anpressstempel in der Ausgangsstellung außerhalb der Durchgangsöffnung angeordnet und fährt erst beim Verfahren des Anpressstempels in die Durchgangsöffnung ein. Dadurch kann der Anpressstempel unabhängig von der Umformmatrize entlang des Gurtbandendes bewegt werden. Bei einer solchen Gestaltung ist insbesondere vorgesehen, dass das Gerät mehrere stationäre Umformmatrizen aufweist und ein bezüglich des Gurtbandendes bewegbares Presswerkzeug aufweist, wobei das Presswerkzeug den Anpressstempel und den Einpressstempel aufweist.

Vorzugsweise erfolgt das Verfahren des Einpressstempels von der Ausgangsposition in die Endposition in Richtung des Anpressstempels und das Verfahren des Anpressstempels von der Ausgangsposition in die Endposition erfolgt in Richtung des Einpressstempels.

Es ist durchaus denkbar, dass es sich bei der Bewegung des Anpressstempels und/oder des Einpressstempels um eine Schwenkbewegung handelt. Allerdings wird es als besonders bevorzugt angesehen, wenn es sich bei der Verfahrbewegung des Einpressstempels und/oder der Verfahrbewegung des Anpressstempels um eine translatorische Bewegung, insofern um eine Bewegung entlang einer Geraden handelt. Eine derartige translatorische Bewegung hat den Vorteil, dass ein besonders präzises und reproduzierbares Ergebnis erreicht wird. Ferner hat eine translatorische Bewegung besondere Vorteile, wenn das Befestigungsgerät für unterschiedliche Gurtdicken und/oder unterschiedlich dimensionierte Gurtverbinder Anwendung finden soll. Durch eine Linearbewegung des Anpressstempels und des Einpressstempels ist sichergestellt, dass unabhängig von der Gurtdicke und unabhängig von dem verwendeten Gurtverbinder stets in die gleiche Richtung eingepresst bzw. angepresst wird.

Es ist durchaus denkbar, dass der Einpressstempel mehrere Abschnitte aufweist oder mehrere Einpresskörper aufweist, sodass mit dem Einpressstempel mehrere Befestigungskrampen gleichzeitig eingepresst werden können. Ebenso kann der Anpressstempel mehrere Abschnitte oder mehrere Anpresskörper aufweisen, um die freien Schenkel von mehreren Befestigungskrampen gleichzeitig anzupressen. Dementsprechend kann auch die Umformmatrize mehrere Biegegesenke und/oder mehrere Durchgangsöffnungen aufweisen.

Als besonders vorteilhaft wird es angesehen, wenn die Umbiegestruktur als Biegegesenk ausgebildet ist. Vorzugsweise weist dieses Biegegesenk einen ersten Gesenkabschnitt für den einen Schenkel der Befestigungsklammer und einen zweiten Gesenkabschnitt für den anderen Schenkel der Befestigungsklammer auf, wobei die beiden Gesenkabschnitte überlappen bzw. ineinander übergehen, wobei die Durchgangsöffnung im Überlappbereich der beiden Biegegesenkabschnitte ausgebildet ist. Vorzugsweise sind die beiden Gesenkabschnitte identisch ausgebildet.

Hinsichtlich einer besonders einfachen Fertigung wird es als vorteilhaft angesehen, wenn die beiden Gesenkabschnitte als teilkugelförmige Vertiefungen ausgebildet sind. Derartige Vertiefungen können besonders einfach hergestellt werden. Die jeweilige Vertiefung ist derart angeordnet, dass an der jeweiligen Vertiefung eines der zwei freien Enden der Krampe umgebogen wird. Dadurch kann auf besonders einfache Art und Weise ein Umbiegen nach innen und ein Versatz der freien Enden zueinander erreicht werden.

Um eine Versetzung der beiden freien Enden der Befestigungskrampe zu erreichen, sodass die beiden Enden nicht übereinander liegen, wird es als besonders vorteilhaft angesehen, wenn die Umbiegestruktur derart gestaltet ist, dass diese die freien Enden aufeinander zu umbiegt, wobei das Umbiegen derart erfolgt, dass die vorgebogenen freien Enden in einer Ansicht von dem Krampenrücken aus auf unterschiedlichen Seiten des Krampenrückens gegenüber dem Krampenrücken hervorstehen. Insofern werden die freien Enden aufeinander zu aber zueinander versetzt umgebogen. Dadurch wird den freien Enden durch das Vorbiegen in diese Zwischenzustand eine Vorzugsrichtung gegeben, wobei beim Einwirken des Anpressstempels diese Vorzugsrichtung im Wesentlichen beibehalten wird, sodass die beiden freien Enden annähernd parallel und schräg zum Krampenrücken in der Endposition an dem zweiten Schenkel des Verbinderelements zur Anlage kommen.

Es wird als vorteilhaft angesehen, wenn der Einpressstempel einen Grundkörper und einen in dem Grundkörper gelagerten Einpresskörper aufweist, der beim Verfahren des Einpressstempels von der Ausgangsstellung in die Endstellung auf die Befestigungskrampe, insbesondere den Krampenrücken, einwirkt zwecks Eintreiben der Befestigungskrampe, wobei der Einpresskörper verschiebbar in dem Grundkörper gelagert ist zur Veränderung eines Abstands des Einpresskörpers von der Umformmatrize in der Endposition des Einpressstempels, wobei der Einpressstempel ein mit dem Einpresskörper zusammenwirkendes Bedienelement aufweist, zum Verschieben des Einpresskörpers gegenüber dem Grundkörper. Durch diese Einstellbarkeit des Abstands des Einpresskörpers von der Umformmatrize kann das Befestigungsgerät in besonders einfacher Art und Weise an unterschiedliche Gurtdicken und/oder unterschiedliche Gurtverbindertypen und/oder unterschiedliche Befestigungskrampen angepasst werden. Beispielsweise werden für dickere Gurte andere Gurtverbinder verwendet, bei denen beispielsweise der Abstand der Schenkel zueinander unterschiedlich groß ist oder auch die Schenkel unterschiedliche Materialstärken aufweisen. Ferner ist es bei dickeren Gurten zweckmäßig, entsprechend größere Befestigungskrampen zu verwenden. Dadurch, dass der Abstand des Einpresskörper von der Umformmatrize einstellbar ist, ist es nicht notwendig, den Hubweg des Einpressstempels als solchen zu verändern. Es ist lediglich notwendig, den Einpresskörper gegenüber dem Grundkörper zu verschieben, um auf diese Weise den Abstand des Einpresskörpers von der Umformmatrize zu verändern, wohingegen der Hubweg des Einpressstempels nicht angepasst werden muss. Dementsprechend ist auf diese Art und Weise eine besonders elegante und einfache Methode zur Anpassung des Befestigungsgeräts auf unterschiedliche Gurtdicken und/oder Verbindertypen und/oder Befestigungskrampen ermöglicht. In einer bevorzugten Ausführungsform ist vorgesehen, dass der Einpresskörper gegenüber dem Grundkörper in Richtung der Umformmatrize hervorsteht. Dementsprechend wird bei einem Verstellen des Einpresskörpers der Überstand des Einpresskörpers gegenüber dem Grundkörper verändert.

Vorzugsweise ist der Einpresskörper in eine Führungsstruktur des Grundkörpers linear geführt.

Bei dem Bedienelement kann es sich vorzugsweise um einen Drehsteller, insbesondere einen Drehschalter, handeln, der ortsfest in den Grundkörper gelagert ist, wobei ein mit dem Drehsteller wirkverbundenes Übertragungselement ein Gewinde aufweist, das mit einem am Einpresskörper ausgebildeten Gegengewinde zusammenwirkt. Der Drehsteller und der Einpresskörper wirken daher in Art eines Spindelantriebs zusammen, sodass beim Drehen des Drehstellers der Grundkörper entsprechend verfahren wird. Das Übertragungselement ist vorzugsweise als Gewindestange ausgebildet oder weist eine Gewindestange auf. Vorzugsweise handelt es sich bei dem Gewinde um ein Trapezgewinde, vorzugsweise um ein Trapezgewinde mit Doppelsteigung. Trapezgewinde haben gegenüber metrischen Gewinden den Vorteil eines größeren Steigungsmaßes bei gleichem Nenndurchmesser. Dadurch wird eine vergleichsweise große Verschiebung je Umdrehung erreicht.

Vorzugsweise weist der Drehsteller einen Arretiermechanismus auf, zum Arretieren des Drehstellers, wobei im arretierten Zustand ein Drehen des Drehstellers verhindert ist, sodass im arretierten Zustand trotz der großen Kräfte beim Einpressen der Befestigungskrampe keine unerwünschte Verschiebung des Einpresskörpers in dem Grundkörper auftritt, da ein mit einem Verschieben einhergehende Drehen des Drehstellers verhindert ist. Der Arretiermechanismus kann beispielsweise dadurch gebildet sein, dass der Drehsteller eine Verzahnung aufweist, wobei in einer Arretierstellung die Verzahnung mit einer feststehenden Gegenverzahnung in Eingriff ist, wodurch ein Drehen Drehstellers verhindert ist. In einer Losstellung sind die Verzahnung und die Gegenverzahnung außer Eingriff und eine Drehen des Drehstellers ist dementsprechend möglich. Das Überführen des Drehstellers von der Arretierstellung in die Losstellung erfolgt vorzugsweise durch ein axiales Verschieben des Drehstellers, beispielsweise durch ein Herausziehen des Drehstellers. Vorzugsweise kann der Drehsteller in unterschiedlichen Drehstellungen, d.h. Winkelpositionen, arretiert werden. Beispielsweise können diese Drehstellungen einen Abstand von 6° zueinander haben, sodass in sechzig unterschiedlichen Drehstellungen eine Arretierung möglich ist.

In der Regel sind die verwendeten Gurtverbinder derart ausgebildet, dass die Schenkel des jeweiligen Verbinderelements im Ausgangszustand nicht parallel ausgerichtet sind, beispielsweise einen Winkel von etwa 15° einschließen. Im verbundenen Zustand hingegen liegen die beiden Schenkel an dem Gurtbandende an, sodass diese zumindest annähernd parallel ausgerichtet sind. Bei derartigen Verbindern spricht man häufig auch von V-förmigen Gurtverbindern. Bei solchen Verbindern müssen die Schenkel der Verbinderelement zunächst geschlossen, insofern an das Gurtende angepresst werden, insbesondere damit etwaige Durchgangslöcher der Schenkel zumindest annähernd zueinander fluchten. Erst dann sollte das Eintreiben der Befestigungskrampen erfolgen. Ansonsten besteht beispielsweise die Gefahr, dass die Schenkel der Befestigungskrampe nicht in die Durchgangslöcher des gegenüberliegenden Schenkels einfahren, wodurch es zu einer Beschädigung des Verbinderelements und/oder des Befestigungsgeräts kommen kann. Unter diesem Aspekt wird es als besonders vorteilhaft angesehen, wenn das Befestigungsgerät eine Pressbacke aufweist, wobei die Pressbacke in Richtung der Umformmatrize vorlaufend zu dem Einpressstempel an dem Einpressstempel, vorzugsweise an dem Grundkörper, gelagert ist, wobei die Pressbacke beim Verfahren des Einpressstempels auf den dem Einpressstempel zugewandten ersten Schenkel der Schenkel einwirkt, zum Anpressen des ersten Schenkels an das Gurtbandende, wobei die Pressbacke entgegen der Rückstellkraft eines Rückstellmittels in Richtung des Einpressstempels bewegbar ist. Dadurch, dass die Pressbacke in Verfahrrichtung des Einpressstempels in Richtung der Umformmatrize vorlaufend zu dem Einpressstempel an dem Einpressstempel gelagert ist, ist sichergestellt, dass beim Verfahren des Einpressstempels zunächst die Pressbacke auf den ersten Schenkel einwirkt und diesen an das Gurtbandende anpresst, wodurch der erste Schenkel und der zweite Schenkel annähernd parallel ausgerichtet werden, insofern das Verbinderelement geschlossen wird. Dementsprechend fluchten dann auch etwaige Durchgangsöffnungen des ersten Schenkels mit den Durchgangsöffnungen des zweiten Schenkels. Der zweite Schenkel liegt vorzugsweise an der Umformmatrize an und wird von dieser gestützt, sodass bei Einwirken der Pressbacke der erste Schenkel in Richtung des zweiten Schenkels umgebogen wird. Durch die Rückstellmittel ist sichergestellt, dass auf den ersten Schenkeln nicht zu starke Kräfte übertragen werden, wodurch eine Beschädigung des ersten Schenkels vermieden wird. Ferner sind die Rückstellmittel auch dahingehend als vorteilhaft anzusehen, dass das Befestigungsgerät für unterschiedliche Gurtdicken oder unterschiedlich Dicke Gurtverbinder geeignet ist, da aufgrund des Rückstellmittels eine gewisse Toleranz für unterschiedliche Dicken gewährleistet ist. Das Rückstellmittel kann eine Feder oder ein Federpaket aufweisen oder durch eine Feder oder ein Federpaket gebildet sein. Das Rückstellmittel ist vorzugsweise zwischen dem Einpressstempel, vorzugsweise dem Grundkörper des Einpressstempels, und der Pressbacke angeordnet. Die Befestigung des Presskörpers an dem Einpressstempel kann beispielsweise mittels einer Schraube, insbesondere einer Passschraube, erfolgen, wobei die Schraube derart mit dem Einpressstempel und der Pressbacke zusammenwirkt, dass eine Bewegung der Pressbacke zu dem Einpressstempel in der Verfahrrichtung des Einpressstempels ermöglicht ist und dementsprechend ein Einfedern des Rückstellmittels ermöglicht ist.

Als besonders vorteilhaft wird es angesehen, wenn die Pressbacke eine Aussparung zur Aufnahme der Befestigungskrampe aufweist, wobei beim Verfahren des Einpressstempels von der Ausgansposition in die Endposition der Einpressstempel in die Aussparung einfährt. Vorzugsweise ist die Aussparung derart gestaltet, dass durch die Aussparung eine Linearführung für die Befestigungskrampe gebildet ist, wobei diese Führung die Befestigungskrampe beim Verfahren des Einpressstempels führt, sodass ein Ausweichen der Befestigungskrampe beim Zustellen des Einpressstempels, insofern dem Verfahren des Einpressstempels von der Ausgangsstellung in die Endstellung, vermieden wird. Dadurch wird ein fehlerhaftes Setzen der Befestigungskrampe vermieden und eine hohe Zuverlässigkeit des Befestigungsgeräts sichergestellt. Ferner wird durch eine als Führung ausgebildete Aussparung die Reproduzierbarkeit der Setzergebnisse erhöht. Die Aussparung ist vorzugsweise schlitzförmig ausgebildet, wobei es durchaus denkbar ist, dass die Aussparung im Bereich des Krampenrückens eine Erweiterung aufweist Dies ist dahingehend als vorteilhaft anzusehen, dass eine Führung vorzugsweise im Bereich der freien Schenkel erfolgen sollte, hingegen der Bereich zwischen den beiden freien Schenkeln größer gestaltet sein sollte, damit der Querschnitt des Einpressstempels deutlich größer sein kann als der Querschnitt der Krampe. Durch einen größeren Einpressstempel wird ein sauberes Einpressen der Befestigungskrampe durch den Einpressstempel sichergestellt.

Es wird als besonders vorteilhaft angesehen, wenn die Pressbacke lediglich auf das freie Ende des ersten Schenkels einwirkt und nicht auf den Bereich des Schenkels einwirkt, der zwischen dem die Schenkel verbindenden Bogenabschnitt und den Befestigungskrampen bzw. der Befestigungskrampe ausgebildet ist. Daher wird es als besonders vorteilhaft angesehen, wenn die Pressbacke im Querschnitt stufenförmig ausgebildet ist.

Wie bereits ausgeführt, sind die Gurtverbinder in der Regel derart ausgebildet, dass diese vor dem Verbinden mit dem Gurtende weiter geöffnet sind und dementsprechend die Schenkel zunächst geschlossen werden müssen. In der Regel sind die Gurtverbinder bereits mit Befestigungskrampen ausgestattet, wobei diese Befestigungskrampen in den Durchgangsöffnungen des ersten Schenkels angeordnet und in Art eines Presssitzes gehalten sind. Um zu vermeiden, dass diese Befestigungskrampen durch die Pressbacke gebogen bzw. in ihrer Ausrichtung bezüglich des ersten Schenkels verändert werden, wird es als besonders vorteilhaft angesehen, wenn die Pressbacke eine gewinkelt zu der Verfahrrichtung des Einpressstempels ausgebildete Ablenkkante aufweist, die beim Verfahren des Einpressstempels mit der Befestigungskrampe, insbesondere dem Krampenrücken, zusammenwirkt. Durch die Ablenkkante wird eine Veränderung der Ausrichtung der Befestigungskrampe bezüglich des ersten Schenkels beim Einwirken der Pressbacke bzw. der Ablenkkante auf die Befestigungskrampe vermieden und gleichzeitig wird durch die Ablenkkante sichergestellt, dass die Befestigungskrampe in die Aussparung eingeführt wird. Insofern ist durch diese Ablenkkante eine Einführhilfe für die Befestigungskrampe gebildet. Bei einem linear verfahrbaren Einpressstempel beträgt der von der Ablenkkante und der Verfahrrichtung des Einpressstempels eingeschlossene Winkel vorzugsweise zwischen 40° und 60°.

In einer besonders bevorzugten Ausführungsform ist vorgesehen, dass der Einpressstempel in einer Linearführung geführt ist, zum Führen der Verfahrbewegung von der Ausgangsposition in die Endposition und umgekehrt, und/oder dass der Anpressstempel eine Linearführung geführt ist, zum Führen der Verfahrbewegung des Anpressstempels von der Ausgangsposition in die Endposition und umgekehrt, und/oder dass die Pressbacke in einer Linearführung geführt ist, zum Führen der Verfahrbewegung der Pressbacke. Die jeweilige Führung kann beispielsweise als Schlittenführung ausgebildet sein.

Vorzugsweise weist das Befestigungsgerät eine mit dem Einpressstempel zusammenwirkende erste Gelenkanordnung mit relativ zueinander verschwenkbaren Gelenkgliedern auf, wobei die erste Gelenkanordnung als Kniehebel ausgebildet ist, und wobei das Befestigungsgerät eine mit dem Anpressstempel zusammenwirkende zweite Gelenkanordnung mit relativ zueinander verschwenkbaren Gelenkgliedern aufweist Die Gelenkanordnungen sind miteinander gekoppelt, wodurch die beiden Stempel gemeinsam verfahrbar sind. Die erste und die zweite Gelenkanordnung sind dabei derart miteinander gekoppelt sind, dass bei einem Betätigen der Gelenkanordnungen zwecks Verfahren der Stempel von der jeweiligen Ausgangsposition in die jeweilige Endposition zunächst der Einpressstempel die Endposition erreicht, wobei sich die erste Gelenkanordnung in der Endposition in einer Totpunktstellung befindet, und zeitlich nachgelagert der Anpressstempel die Endposition erreicht. Durch diese Art der Kopplung ist sichergestellt, dass die Krampe vollständig eingetrieben ist, bevor der Anpressstempel auf die freien Enden einwirkt. Grundsätzlich ist es durchaus denkbar, dass der Anpressstempel schon vor dem Erreichen der Totpunktstellung in Richtung des Einpressstempels bewegt wird, allerdings kontaktiert der Anpressstempel bei dieser Bewegung die freien Enden der Befestigungskrampe noch nicht. Dadurch, dass sich die erste Gelenkanordnung in der Totpunktstellung befindet, wird die Krampe beim Anpressen der umgebogenen freien Enden an den zweiten Schenkel mittels des Anpressstempels durch den gegenüberliegenden Einpressstempel gestützt, da aufgrund der in der Totpunktstellung befindlichen ersten Gelenkanordnung ein ungewolltes Verfahren des Einpressstempels in Richtung der Ausgangsposition beim Einwirken des Anpressstempels zuverlässig verhindert ist.

Die Gelenkglieder sind vorzugsweise als Hebel ausgebildet. Um die zeitliche Abfolge der Verfahrbewegungen des Einpressstempels und des Anpressstempels zu gewährleisten, ist in einer bevorzugten Ausführungsform vorgesehen, dass ein erstes Hebel der zweiten Gelenkanordnung eine Freilaufkontur aufweist und ein zweiter Hebel der zweiten Gelenkanordnung in dieser Freilaufkontur gelenkig gelagert ist. Die Freilaufkontur kann beispielsweise als Langloch ausgebildet sein. Die Freilaufkontur lässt einen Leerhubweg in der zweiten Gelenkanordnung zu, sodass bei einer Betätigung der ersten Gelenkanordnung trotz der Kopplung zwischen der ersten und der zweiten Gelenkanordnung der zweite Hebel der zweiten Gelenkanordnung nicht bewegt wird. Die Bewegung des zweiten Hebels beginnt vorzugsweise erst dann, wenn die erste Gelenkanordnung die erste Totpunktstellung erreicht oder erreicht hat.

Vorzugsweise umfasst die erste Gelenkanordnung genau zwei Hebel, wobei der ersten Hebel frei verschwenkbar ist und dementsprechend keine ortsfeste Schwenkachse aufweist und der zweite Hebel um eine ortsfeste Schwenkachse schwenkbar ist und mit dem Einpressstempel gekoppelt ist. Die zweite Gelenkanordnung umfasst vorzugsweise ebenfalls genau zwei Hebel, wobei der ersten Hebel frei verschwenkbar ist und dementsprechend keine ortsfeste Schwenkachse aufweist und der zweite Hebel um eine ortsfeste Schwenkachse schwenkbar ist.

Vorzugsweise weist das Befestigungsgerät einen Antrieb zum Verfahren des Anpressstempels und/oder des Anpressstempels auf. Vorzugsweise wirkt der Antrieb mit einer Gelenkanordnung zusammen, die wiederum mit den Stempeln zusammenwirkt. Bei dem Antrieb handelt es sich vorzugsweise um einen Linearantrieb. Bei dem Antrieb des Befestigungsgeräts handelt es sich vorzugsweise um eine Kolben-Zylinder-Einheit. Bei der Kolben-Zylinder-Einheit handelt es sich vorzugsweise um einen Pneumatik- oder Hydraulik- oder Elektrozylinder.

Es ist aber auch durchaus denkbar, dass das Befestigungsgerät anstatt des Antriebs oder zusätzlich zu dem Antrieb eine rotierbare Welle mit einer Kopplungsstruktur zur drehmomentsübertragenden Kopplung mit einer korrespondierenden Kopplungsgegenstruktur eines externen Drehantriebs aufweist. Bei dem externen Drehantrieb kann es sich beispielsweise um einen Schrauber, insbesondere einen elektromotorischen Schrauber, handeln. Die Kopplungsstruktur kann derart ausgebildet sein, wie es von Schraubenköpfen bekannt ist. Beispielsweise kann die Kopplungsstruktur als Innensechskant, Außensechskant, Innenvierkant oder Außenvierkant ausgebildet sein. Vorzugsweise wird die rotatorische Bewegung der Welle in eine translatorische Bewegung eines Übertragungselements umgewandelt, wie es beispielsweise von Spindelantrieben bekannt ist. Die Welle kann beispielsweise einen Gewindeabschnitt aufweisen, wobei das Übertragungselement ein mit dem Gewinde zusammenwirkendes Gegengewinde aufweist, sodass bei Drehung der Kopplungsstruktur das Übertragungselement entsprechend der Gewindesteigung linear verschoben wird. Vorzugsweise wirkt das Übertragungselement mit einer Gelenkanordnung zusammen, die wiederum mit den Stempeln zusammenwirkt.

Bei einer Ausführungsform mit einer vorbeschriebenen Gelenkanordnung erfolgt die Kopplung zwischen der Gelenkanordnung und dem Antrieb vorzugsweise über eine Antriebsstange, die gelenkig mit einem der Hebel der Gelenkanordnungen verbunden ist. Vorzugsweise ist die erste Gelenkanordnung mittels der Antriebsstange mit dem Antrieb gekoppelt, wobei die Antriebsstange über ein Verbindungsmittel, beispielsweise einen Bolzen, gelenkig mit dem ersten Hebel der ersten Gelenkanordnung verbunden ist. Das Verbindungsmittel ist in einer gehäusefesten Führungsstruktur entlang einer Bahnkurve geführt, wobei ein Totpunktabschnitt dieser Bahnkurve derart ausgebildet ist, dass beim Abfahren des Totpunktabschnitts trotz Verschwenkens des ersten Hebels der ersten Gelenkanordnung die erste Gelenkanordnung in einer Totpunktstellung verbleibt. Dies kann beispielsweise dadurch bewirkt werden, dass der Totpunktabschnitt der Bahnkurve einen Kreisbogen um eine Schwenkachse zwischen dem ersten Hebel und dem mit dem ersten Hebel gelenkig verbundenen zweiten Hebel der ersten Gelenkanordnung beschreibt.

In einer bevorzugten Ausführungsform des Befestigungsgeräts weist das Befestigungsgerät ein Gestell auf, wobei das Gestell eine Lagerschiene zum Lagern des Gurtbandendes mit daran angeordnetem Gurtverbinder aufweist, wobei entlang einer Längserstreckung der Lagerschiene in der Lagerschiene mehrere Umformmatrizen ausgebildet oder angeordnet sind, und wobei das Befestigungsgerät ein Presswerkzeug aufweist, wobei das Presswerkzeug den Einpressstempel und den Anpressstempel aufweist, wobei die Lagerschiene zwischen der Einpressstempel des Presswerkzeugs und der Anpressstempel des Presswerkzeugs angeordnet ist.

Vorzugsweise weist das Gestell eine nicht mit der Lagerschiene identische Führungsschiene aufweist, wobei das Presswerkzeug entlang der Lagerschiene, somit entlang des Gurtbandendes, verschiebbar in der Führungsschiene gelagert ist. Dadurch, dass das Presswerkzeug in einer nicht mit der Lagerschiene identischen Führungsschiene gelagert ist, ist die Lagerschiene durch das Eigengewicht des Presswerkzeugs nicht belastet, da kein Abstützen des Presswerkzeugs an der Lagerschiene stattfindet. Dementsprechend ist die Lagerschiene nur durch das Eigengewicht des Gurtbandendes und durch die daran angeordneten Gurtverbinder belastet. Die Belastung ist relativ gering, sodass keine besonders hohen Anforderungen an die mechanische Stabilität der Lagerschiene gestellt werden müssen. Dementsprechend kann die Lagerschiene einfach und kostengünstig gefertigt werden. Beispielsweise kann die Lagerschiene aus einem dünnen Flachstahl gefertigt werden. Der Flachstahl kann aufgrund der geringen mechanischen Belastung eine relativ geringe Materialstärke aufweisen, beispielsweise eine Materialstärke von 4 mm bis 10 mm aufweisen.

Als besonders vorteilhaft wird es angesehen, wenn das Gestell zwei parallel verlaufende Führungsschienen aufweist, wobei bei Verwendung des Befestigungsgeräts die beiden Führungsschienen in einer Hochrichtung des Befestigungsgeräts unterhalb der Lagerschiene ausgebildet sind und in einer Draufsicht auf das Befestigungsgerät von oben die Lagerschiene zwischen den beiden Führungsschienen ausgebildet ist. Die Führung des Presswerkzeugs in der jeweiligen Führungsschiene kann beispielsweise als Schlittenführung, insbesondere als rollengelagerte Schlittenführung, ausgebildet sein. Eine Profilführung ist ebenfalls denkbar.

Als besonders vorteilhaft wird es angesehen, wenn die Umformmatrizen als separate Bauteile ausgebildet sind, wobei die Lagerschiene Lageraufnahmen aufweist, wobei die Umformmatrizen in den Lageraufnahmen gelagert sind, insbesondere in diese eingelegt sind, wobei die Lageraufnahmen zumindest im Bereich der Durchgangsöffnungen der Umformmatrizen wiederum Durchgangsöffnungen für den Anpressstempel aufweisen. Da die Umformmatrizen die Bauteile des Gestells sind, die einer besonders hohen mechanischen Belastung und einem dementsprechenden Verschleiß unterliegen, ist die Ausführung dieser Bauteile als separate Bauteile besonders vorteilhaft, da die Umformmatrizen aus einem anderen Material gefertigt werden können als die Lagerschiene, insbesondere aus einem verschleißärmeren, insbesondere härterem, Material gefertigt werden können, beispielsweise Werkzeugstahl. Dies wäre bei einer Ausführungsform, in der die Umformmatrizen integraler Bestandteil der Lagerschiene sind, nicht möglich. In einem solchen Fall müsste die gesamte Lagerschiene aus einem entsprechend geeignetem Material gefertigt werden, wodurch wiederum die Herstellungskosten des Gestells höher wären. Ferner hat die Verwendung von als separaten Bauteilen ausgebildeten Umformmatrizen den Vorteil, dass eine verschlissene Umformmatrize in einfacher Art und Weise ausgetauscht werden kann. Ferner kann durch einen Austausch der Umformmatrize durch eine Umformmatrize mit einer anders gestalteten Umbiegestruktur das Gestell für unterschiedliche Verbinder und/oder unterschiedliche Befestigungskrampen eingesetzt werden. Zur Anpassung muss lediglich ein Austausch der Umformmatrizen erfolgen.

Vorzugsweise sind die Lageraufnahmen für die Umformmatrizen als Durchgangsöffnungen ausgebildet, wobei die Umformmatrizen in diese Lageraufnahmen eingesetzt sind und schwerkraftunterstützt rückseitig an einer Stützstruktur anliegen. Bei der Stützstruktur kann es sich beispielsweise um eine oder mehrere rückseitig an die Lagerschiene angebrachte Stützschienen handeln. Die Stützschienen können beispielsweise an die Lagerschiene angeschraubt sein.

Es ist durchaus denkbar, dass die Umformmatrizen mit einem mit der Lagerschiene und/oder den Stützschienen zusammenwirkenden Sicherungsmittel gesichert sind. Bei dem Sicherungsmittel kann es sich beispielsweise um eine Schraube handeln, die in die Umformmatrize eingeschraubt ist und mit der Lagerschiene und/oder den Stützschienen zusammenwirkt. Durch das Sicherungsmittel wird ein unbeabsichtigtes Entnehmen der Umformmatrize aus der Lagerschiene sichergestellt.

Die als separate Bauteile ausgebildeten Umformmatrizen sind vorzugsweise blockartig ausgebildet und weisen eine Stärke auf, die vorzugsweise zumindest der Stärke der Lagerschiene entspricht.

Um die mechanische Belastung der Lagerschiene beim Vorgang des Setzens der Befestigungskrampe weiter zu reduzieren, ist in einer bevorzugten Ausführungsform der Erfindung vorgesehen, dass das Presswerkzeug eine Stützstruktur aufweist zum Abstützen der jeweiligen Umformmatrize auf der dem Einpressstempel abgewandten Seite der Umformmatrize beim Vorgang des Einpressens der Befestigungskrampe mittels des Einpressstempels, wobei die jeweilige Umformmatrize auf einem elastisch verformbaren Rückstellmittel in der Lagerschiene gelagert ist, sodass bei Krafteinwirkung des Einpressstempels auf die Umformmatrize die Umformmatrize unter Verformung des Rückstellmittels an der Stützstruktur zur Anlage kommt und ohne Krafteinwirkung des Einpressstempels auf die Umformmatrize die Umformmatrize von der Stützstruktur beabstandet ist. Durch dieses Abstützen der Umformmatrize an der werkzeugseitigen Stützstruktur werden dementsprechend die beim Einpressen der Krampe aufgebrachten Kräfte nicht in die Lagerschiene als solche, sondern über die Stützstruktur in das Presswerkzeug eingeleitet. Dementsprechend wird die Lagerschiene nicht oder zumindest nur geringfügig mechanisch belastet. Die Lagerschiene wird dementsprechend beim Einpressen der Befestigungskrampe gar nicht oder nur sehr geringfügig, nämlich in der Größenordnung der Rückstellkraft des Rückstellmittels, belastet. Bei unbelastetem Zustand ist die Umformmatrize hingegen von der Stützstruktur beabstandet, sodass die Stützstruktur beim Verschieben des Presswerkzeugs bezüglich der Lagerschiene nicht die Umformmatrizen kontaktiert und dementsprechend die Umformmatrizen das Verschieben des Presswerkzeugs bezüglich der Lagerschiene nicht behindern. Vorzugsweise beträgt der Abstand der Umformmatrize von der Stützstruktur im unbelasteten Zustand 0,3 mm bis 0,7 mm. Besonders bevorzugt beträgt der Abstand in etwa 0,5 mm.

Insbesondere umfasst das Presswerkzeug ein Gehäuse, wobei in diesem Gehäuse die erste Gelenkanordnung, die zweite Gelenkanordnung, der Einpressstempel und der Anpressstempel gelagert sind.

Vorzugsweise handelt es sich bei dem Presswerkzeug um ein pneumatisch antreibbares Presswerkzeug, wobei das Presswerkzeug insbesondere einen als Pneumatikzylinder ausgebildeten Antrieb aufweist. Beim Betätigen des pneumatischen Antriebs, beispielsweise durch entsprechende Druckbeaufschlagung eines PneumatikZylinders, verfahren der Einpressstempel und/oder der Anpressstempel von der Ausgangsposition in die Endposition. Um zu vermeiden, das der pneumatische Antrieb in einer Position des Presswerkzeugs betätigt wird, in der das Presswerkzeug nicht korrekt bezüglich des zu befestigenden Verbinderelements positioniert ist, umfasst das Presswerkzeug in einer vorteilhaften Ausführungsform ein mechanisch betätigbares Ventil mit einem Ventilkörper und einem in dem Ventilkörper zwischen einer ersten Endstellung und einer zweiten Endstellung verschiebbaren Ventilkolben, wobei in den beiden Endstellung des Ventilkolbens ein Betätigen des Antriebs, beispielsweise eine Druckbeaufschlagung des Pneumatikzylinders, verhindert ist und in der Zwischenstellung zwischen den beiden Endstellungen ein Betätigen des Antriebs möglich ist, wobei bei einem Verschieben des Presswerkzeugs in dem Gestell der Ventilkolben mit einem entlang des Verschiebewegs ausgebildeten Abschnitt des Gestells, vorzugsweise einem Abschnitt der Lagerschiene, zusammenwirkt, wobei der Abschnitt eine Strukturierung aufweist, wobei die Strukturierung derart ausgebildet ist, dass sich der Ventilkolben ausschließlich in Einpresspositionen des Presswerkzeugs, in denen der Anpressstempel in die Durchgangöffnung der Umformmatrize einfahren kann, in der Zwischenposition befindet. Dementsprechend stellt das Ventil sicher, dass ausschließlich in den Einpresspositionen ein Zustellen bzw. Schließen des Presswerkzeugs erfolgen kann. Dadurch, dass nur in der Zwischenstellung eine Betätigung des Antriebs des Presswerkzeugs möglich ist, ist verhindert, dass das Presswerkzeug unbeabsichtigt betätigt wird, wenn sich das Presswerkzeug nicht in dem Gestell befindet. Ein Akzeptanzbereich der Zwischenstellung, somit der Akzeptanzbereich, in dem ein Betätigen des Antriebs möglich ist, liegt vorzugsweise im Bereich von wenigen Millimetern, insbesondere im Bereich von 1 mm bis 3 mm, vorzugsweise im Bereich von 1 mm bis 2 mm. Dadurch, dass lediglich in einer Zwischenstellung des Ventilkörpers eine Betätigung möglich ist, kann durch ein unpräzises Herunterdrücken des Ventilkolbens kein Zustand herbeigeführt werden, in dem eine Betätigung des Presswerkzeugs möglich ist, da ein Herunterdrücken zu einer der beiden Endstellungen des Ventilkörpers führt, indem eine Betätigung des Presswerkzeugs nicht möglich ist.

Vorzugsweise ist der Ventilkolben federbelastet. Dementsprechend erfolgt ein Verschieben des Ventilkolbens entgegen der Federkraft der Feder. In einem Grundzustand des Ventils befindet sich das Ventil in einer der beiden Endstellungen.

Als besonders vorteilhaft wird es angesehen, wenn der die Strukturierung aufweisende Abschnitt Bestandteil der Lagerschiene ist.

Die Strukturierung ist vorzugsweise als Lochraster ausgebildet.

Vorzugsweise ist das Ventil auf derselben Seite der Lagerschiene angeordnet wie der Anpressstempel. Dementsprechend wird es als besonders vorteilhaft angesehen, wenn der Ventilkolben mit einer Unterseite der Lagerschiene zusammenwirkt.

Es wird als besonders vorteilhaft hinsichtlich einer Vereinfachung der Verschiebbarkeit des Presswerkzeugs angesehen, wenn an dem Ventilkörper ein Laufrad angebracht ist, insbesondere das Ventil einen Rollenstößel aufweist, wobei dieses Laufrad mit dem strukturierten Abschnitt zusammenwirkt. Das Laufrad begünstigt auch das Abfahren der Strukturierung.

Vorzugsweise erfolgt das Verschieben des Ventilkolbens senkrecht zu der Verschiebebewegung des Presswerkzeugs entlang der Lagerschiene erfolgt.

Es ist durchaus denkbar, dass das Ventil lediglich dem Schalten von Steuerluft dient, wobei diese Steuerluft wiederum zum Schalten eines Steuerventils dient, das den Pneumatikzylinder abhängig von der anliegenden Steuerluft dem Antrieb Druckluft zum Betätigen des Antriebs zuführt.

In einer bevorzugten Ausführungsform des Presswerkzeugs handelt es sich bei dem Presswerkzeug um ein von einem Bediener zu bedienendes Presswerkzeug, wobei das Auslösen eines Pressvorgangs, insofern eine Betätigung des Antriebs, händisch am Presswerkzeug erfolgen muss. Zu diesem Zweck weist das Presswerkzeug eine erste Bedienvorrichtung für die eine Hand des Bedieners und eine zweite Bedienvorrichtung für die andere Hand des Bedieners auf, wobei diese beiden Bedienvorrichtungen gleichzeitig bedient werden müssen, um den Antrieb zu betätigen. Die beiden Bedienvorrichtungen sind derart an dem Presswerkzeug angebracht, dass ein Bedienen der Bedienvorrichtungen nur unter Verwendung von beiden Händen des Bedieners, somit beidhändig, möglich ist. Die Betätigung des Antriebs kann allerdings nur dann erfolgen, wenn sich das mit der Strukturierung zusammenwirkende Ventil in der Zwischenstellung befindet. Vorzugsweise sind die Bedienvorrichtungen ebenfalls mit mechanisch betätigbaren Ventilen, insbesondere in Form von Drucktastern, ausgestattet, die zusammen mit dem mit der Strukturierung zusammenwirkenden Ventil eine pneumatischen Steuerkette bilden, um ein unbeabsichtigtes Bedienen des Antriebs zu verhindern. Nur wenn alle drei Ventile in der richtigen Schaltstellung sind, wird der Antrieb betätigt. Sollte ein Ventil nicht in der richtigen Schaltstellung sein, wird der Antrieb nicht betätigt. Das mit der Strukturierung zusammenwirkende Ventil, das mit der einen Bedienvorrichtung zusammenwirkende Ventil und das mit der anderen Bedienvorrichtung zusammenwirkende Ventil können zu diesem Zweck in Reihe geschaltet sein, sodass nur wenn sich alle drei Ventile in einer Durchlassstellung befinden, der Antrieb betätigt wird. Vorzugsweise strömt in der Durchlassstellung der Ventile Steuerluft zu einem Steueranschluss eines pneumatisch betätigbaren Pneumatik-Ventils zwecks Schaltens des Pneumatik-Ventils, wobei bei Anliegen von Steuerluft an dem Steueranschluss des Pneuamtik-Ventils, das Pneumatik-Ventil in eine Schaltstellung überführt wird, in der ein pneumatische Antrieb derart mit Druckluft beaufschlagt wird, dass die Stempel in die Endpositionen überführt werden.

Bei dem erfindungsgemäßen Verfahren zum Befestigen von einem Gurtverbinder an einem Gurtbandende ist vorgesehen, dass dieses Verfahren unter Verwendung des erfindungsgemäßen Befestigungsgeräts oder einer der vorteilhaften Ausführungsformen des Befestigungsgeräts erfolgt. Das Verfahren weist die folgenden Verfahrensschritte auf:
a) Anordnen eines Verbinderelements des Gurtverbinders mit zwischen den Schenkeln des Verbinderelements angeordnetem Gurtbandende zwischen dem Einpressstempel und der Umformmatrize,
b) Einpressen zumindest einer Befestigungskrampe unter Durchdringung des zwischen den Schenkeln des Verbinderelements angeordneten Gurtbandendes mittels Verfahren des Einpressstempels von der Ausgangsposition in die Endposition,
c) Umbiegen der austretenden freien Enden der Befestigungskrampe an der Umbiegestruktur der Umformmatrize in Richtung des zweiten Schenkels,
d) Anpressen der umgebogenen freien Enden der Befestigungskrampe an den zweiten Schenkel mittels Verfahren des Anpressstempels von der Ausgangsposition in die Endposition,
   wobei der Verfahrensschritt d) zeitlich nach dem Verfahrensschritt c) durchgeführt wird und wobei die Verfahrensschritt b), c) und d) in ein und derselben Position des Befestigungsgeräts bezüglich des Verbinderelements durchgeführt werden.

Die Verfahrensschritte b) und c) erfolgen vorzugsweise zeitgleich, d.h. beim Einpressen der Befestigungskrampe werden die austretenden freien Enden an die Umbiegestruktur gepresst und dadurch in Richtung des zweiten Schenkels umgebogen.

Der Verfahrensschritt a) erfolgt bei Verwendung eines Gestells und eines Presswerkzeugs vorzugsweise dadurch, dass zunächst der Gurtverbinder mit dem Gurtbandende im Gestell angeordnet und anschließend das mobile Presswerkzeug bezüglich des Gestells entsprechend zu dem zu befestigenden Verbinderelement positioniert wird.

Einige Aspekte des Befestigungsgeräts können auch bei Befestigungsgeräten Anwendung finden, die nicht notwendigerweise eine Umformmatrize und/oder einen Anpressstempel aufweisen. Soweit Merkmale nicht mit der Umformmatrize und/oder einen Anpressstempel in Zusammenhang stehen, können diese auch allgemein bei einem Befestigungsgerät Anwendung finden.

In diesem Zusammenhang betrifft die vorliegende Offenbarung insbesondere auch die folgenden Gegenstände:
Aspekt 1: Befestigungsgerät zum Befestigen eines Gurtverbinders an einem Gurtbandende eines Transportgurts mittels Befestigungselementen, beispielsweise Krampen oder Nieten, wobei der Gurtverbinder zumindest ein Verbinderelement mit einem ersten Schenkel und einem zweiten Schenkel aufweist, wobei das Befestigungsgerät ein Gestell und ein Presswerkzeug mit einem pneumatischen Antrieb aufweist, wobei das Presswerkzeug einen Einpressstempel aufweist, wobei durch Verfahren des Einpressstempels von einer Ausgangsposition in eine Endposition das Befestigungselement unter Durchdringung des Gurtbandendes in die Schenkel des Verbinderelements einpressbar ist, wobei das Gestell eine Lagerschiene zum Lagern des Gurtbandendes mit daran angeordnetem Gurtverbinder aufweist, wobei das Gestell eine Führungsschiene aufweist, wobei das Presswerkzeug entlang der Lagerschiene somit entlang des Gurtbandendes verschiebbar in der Führungsschiene gelagert ist, wobei das Presswerkzeug ein mechanisch betätigbares Ventil mit einem Ventilkörper und einem in dem Ventilkörper zwischen einer ersten Endstellung und einer zweiten Endstellung verschiebbaren Ventilkolben aufweist, wobei in den beiden Endstellung des Ventilkolbens ein Betätigen des Antriebs verhindert ist und in der Zwischenstellung zwischen den beiden Endstellungen ein Betätigen des Antriebs möglich ist, wobei bei einem Verschieben des Presswerkzeugs in dem Gestell der Ventilkolben mit einem entlang des Verschiebewegs ausgebildeten Abschnitt des Gestells zusammenwirkt, wobei der Abschnitt eine Strukturierung aufweist, wobei die Strukturierung derart ausgebildet ist, dass sich der Ventilkolben ausschließlich in Einpresspositionen des Presswerkzeugs, in denen ein Einpressen des Befestigungselements mittels Verfahren des Einpressstempels möglich ist, in der Zwischenposition befindet.
Aspekt 2: Ein Befestigungsgerät nach Aspekt 1, wobei die Führungsschiene nicht mit der Lagerschiene identisch ist.
Aspekt 3: Ein Befestigungsgerät nach Aspekt 1 oder 2, wobei an dem Ventilkörper ein Laufrad angebracht ist, insbesondere das Ventil einen Rollenstößel aufweist, wobei dieses Laufrad mit dem strukturierten Abschnitt zusammenwirkt.
Aspekt 4: Ein Befestigungsgerät nach einem der Aspekte 1 bis 3, wobei das Presswerkzeug eine erste Bedienvorrichtung für die eine Hand eines Bedieners und eine zweite Bedienvorrichtung für eine andere Hand des Bedieners auf, wobei diese beiden Bedienvorrichtungen gleichzeitig bedient werden müssen, um den Antrieb zu betätigen, wobei beiden Bedienvorrichtungen derart an dem Presswerkzeug angebracht, dass ein Bedienen der Bedienvorrichtungen nur unter Verwendung von beiden Händen des Bedieners, somit beidhändig, möglich ist.
Aspekt 5: Ein Befestigungsgerät nach Aspekt 4, wobei die Bedienvorrichtungen ebenfalls mit mechanisch betätigbaren Ventilen, insbesondere in Form von Drucktastern, ausgestattet sind, die zusammen mit dem mit der Strukturierung zusammenwirkenden Ventil eine pneumatischen Steuerkette bilden, um ein unbeabsichtigtes Bedienen des Antriebs zu verhindern. Nur wenn alle drei Ventile in der richtigen Schaltstellung sind, wird der Antrieb betätigt. Sollte ein Ventil nicht in der richtigen Schaltstellung sein, wird der Antrieb nicht betätigt. Das mit der Strukturierung zusammenwirkende Ventil, das mit der einen Bedienvorrichtung zusammenwirkende Ventil und das mit der anderen Bedienvorrichtung zusammenwirkende Ventil können zu diesem Zweck in Reihe geschaltet sein, sodass nur wenn sich alle drei Ventile in einer Durchlassstellung befinden, der Antrieb betätigt wird. Vorzugsweise strömt in der Durchlassstellung der Ventile Steuerluft zu einem Steueranschluss eines pneumatisch betätigbaren Pneumatik-Ventils zwecks Schaltens des Pneumatik-Ventils, wobei bei Anliegen von Steuerluft an dem Steueranschluss des Pneuamtik-Ventils, das Pneumatik-Ventil in eine Schaltstellung überführt wird, in der ein pneumatische Antrieb derart mit Druckluft beaufschlagt wird, dass der Einpressstempel von der Ausgangsposition in die Endposition verfahren wird.
Aspekt 6: Befestigungsgerät zum Befestigen eines Gurtverbinders an einem Gurtbandende eines Transportgurts mittels Befestigungselementen, beispielsweise Krampen oder Nieten, wobei der Gurtverbinder zumindest ein Verbinderelement mit einem ersten Schenkel und einem zweiten Schenkel aufweist, wobei das Presswerkzeug einen Einpressstempel aufweist, wobei durch Verfahren des Einpressstempels von einer Ausgangsposition in eine Endposition das Befestigungselement unter Durchdringung des Gurtbandendes in die Schenkel des Verbinderelements einpressbar ist, wobei das Befestigungsgerät eine Pressbacke aufweist, wobei die Pressbacke in Richtung der Umformmatrize vorlaufend zu dem Einpressstempel an dem Einpressstempel gelagert ist, wobei die Pressbacke beim Verfahren des Einpressstempels auf den dem Einpressstempel zugewandten ersten Schenkel der Schenkel einwirkt, zum Anpressen des ersten Schenkels an das Gurtbandende, wobei die Pressbacke entgegen der Rückstellkraft eines Rückstellmittels in Richtung des Einpressstempels bewegbar ist.
Aspekt 7: Ein Befestigungsgerät nach Aspekt 6, wobei das Rückstellmittel eine zwischen dem Einpressstempel und der Pressbacke angeordnete Feder aufweist. Aspekt 8: Befestigungsgerät zum Befestigen eines Gurtverbinders an einem Gurtbandende eines Transportgurts mittels Befestigungselementen, beispielsweise Krampen oder Nieten, wobei der Gurtverbinder zumindest ein Verbinderelement mit einem ersten Schenkel und einem zweiten Schenkel aufweist, wobei das Presswerkzeug einen Einpressstempel aufweist, wobei durch Verfahren des Einpressstempels von einer Ausgangsposition in eine Endposition das Befestigungselement unter Durchdringung des Gurtbandendes in die Schenkel des Verbinderelements einpressbar ist, wobei der Einpressstempel einen Grundkörper und einen in dem Grundkörper gelagerten Einpresskörper aufweist, der beim Verfahren des Einpressstempels von der Ausgangsstellung in die Endstellung auf das Befestigungselement einwirkt zwecks Eintreibens des Befestigungselements, wobei der Einpresskörper verschiebbar in dem Grundkörper gelagert ist zur Veränderung einer Position des Einpresskörpers in der Endposition des Einpressstempels, wobei der Einpressstempel ein mit dem Einpresskörper zusammenwirkendes Bedienelement aufweist, zum Verschieben des Einpresskörpers gegenüber dem Grundkörper.

In den nachfolgenden Figuren wird die Erfindung anhand von Ausführungsbeispielen näher erläutert, ohne auf dieses beschränkt zu sein. Es zeigen:
- Fig. 1: ein Befestigungsgerät umfassend ein Gestell und ein Presswerkzeug in einer perspektivischen Darstellung schräg von vorne,
- Fig. 2: das Befestigungsgerät gemäß Fig. 1 in einer perspektivischen Ansicht schräg von hinten,

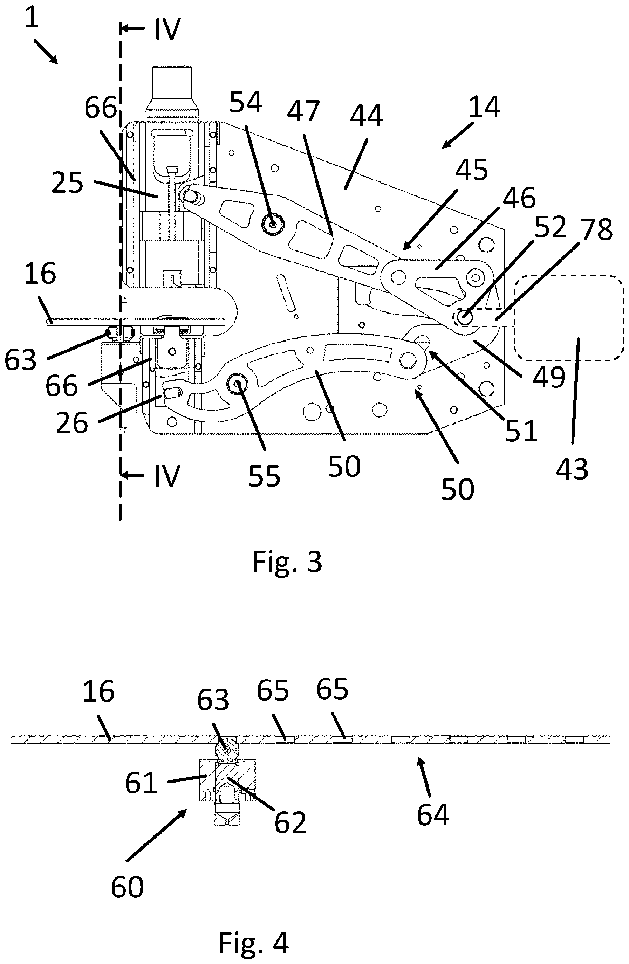

- Fig. 3: Bestandteile des Befestigungsgeräts gemäß Fig. 1 in einer Seitenansicht,
- Fig. 4: Bestandteile des Befestigungsgeräts in einer Schnittansicht gemäß der Linie IV-IV in Fig. 3,
- Fig. 5: Bestandteile des Befestigungsgeräts gemäß Fig. 1 mit eingelegtem Gurtbandende und daran angeordnetem Gurtverbinder in einer Schnittansicht,
- Fig. 5a: Ein Teilbereich der Fig. 5 in einer vergrößerten Ansicht,
- Fig. 6: das Befestigungsgerät in einer Ansicht gemäß der Fig. 5 beim Vorgang des Befestigens des Gurtverbinders an dem Gurtbandende mit einem Einpressstempel in einer Ausgangsposition und dem Anpressstempel in einer Ausgangsposition,
- Fig. 7: eine Ansicht des Befestigungsgeräts wie in Fig. 6 mit den Stempeln in einer Zwischenposition,
- Fig. 8: eine Ansicht des Befestigungsgeräts wie in Fig. 6 mit dem Einpressstempel in einer Endposition und dem Anpressstempel in einer Zwischenposition,
- Fig. 9: eine Ansicht des Befestigungsgeräts wie in Fig. 6 mit dem Einpressstempel in der Endposition und dem Anpressstempel in einer Endposition,
- Fig. 10: eine Ansicht des Befestigungsgeräts wie in Fig. 6 mit dem Einpressstempel in der Ausgangsposition und dem Anpressstempel in der Ausgangsposition,

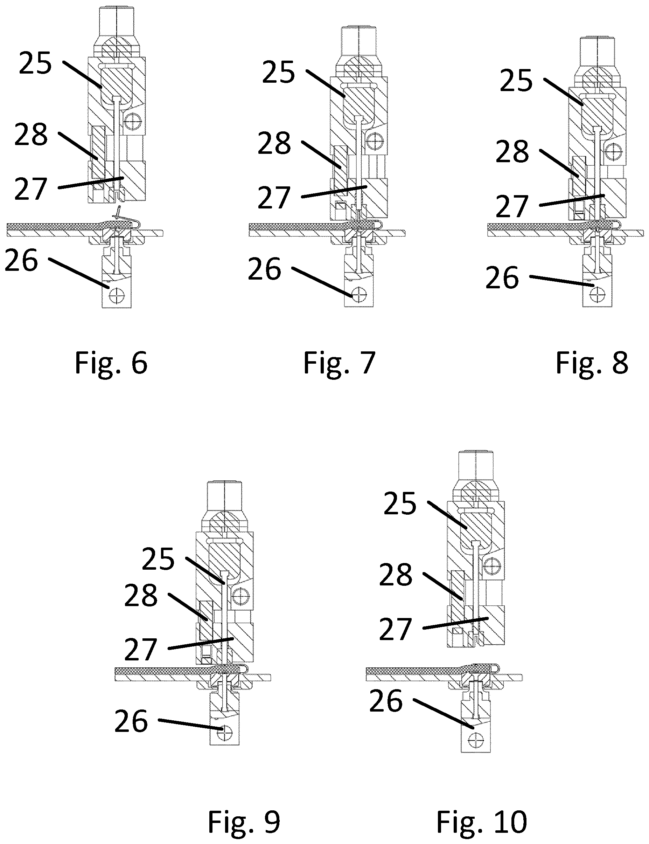

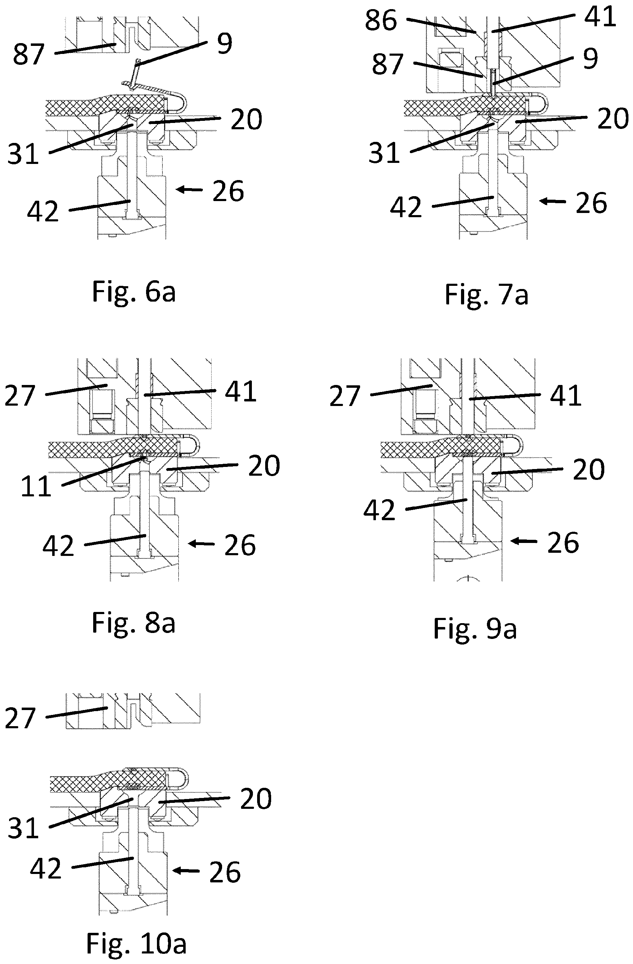

- Fig. 6a: ein Teilbereich der Fig. 6 in einer vergrößerten Ansicht,
- Fig. 7a: ein Teilbereich der Fig. 7 in einer vergrößerten Ansicht,
- Fig. 8a: ein Teilbereich der Fig. 8 in einer vergrößerten Ansicht,
- Fig. 9a: ein Teilbereich der Fig. 9 in einer vergrößerten Ansicht,
- Fig. 10a: ein Teilbereich der Fig. 10 in einer vergrößerten Ansicht,

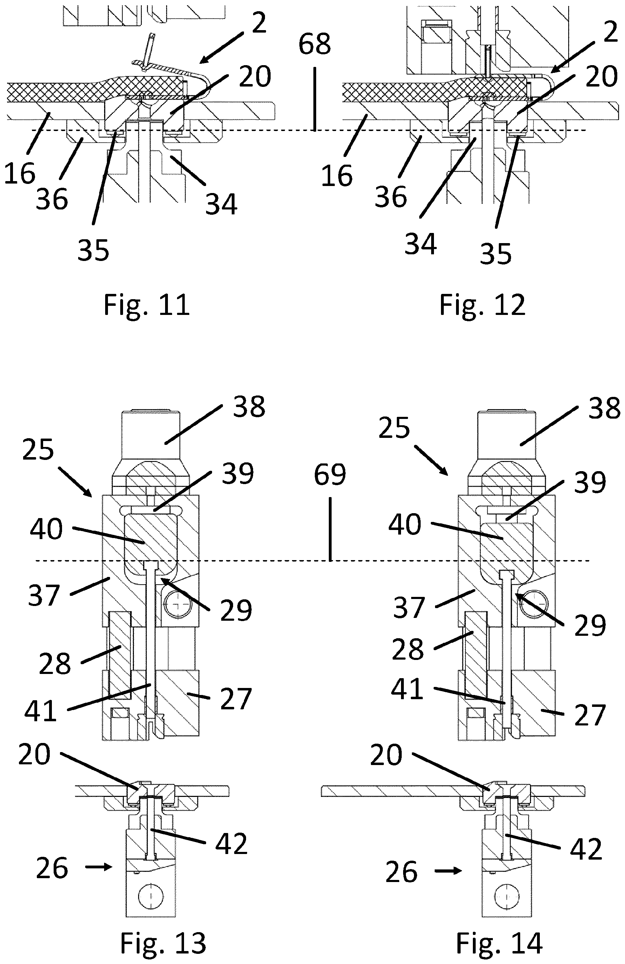

- Fig. 11: einen Teilbereich der Fig. 6 in einer vergrößerten Ansicht,
- Fig. 12: einen Teilbereich der Fig. 7 in einer vergrößerten Ansicht,
- Fig. 13: einen Teilbereich des Befestigungsgeräts in einer Einstellung für dicke Gurte in einer Schnittansicht,
- Fig. 14: das Befestigungsgerät in einer Einstellung für dünne Gurte in einer Ansicht wie in Fig. 13

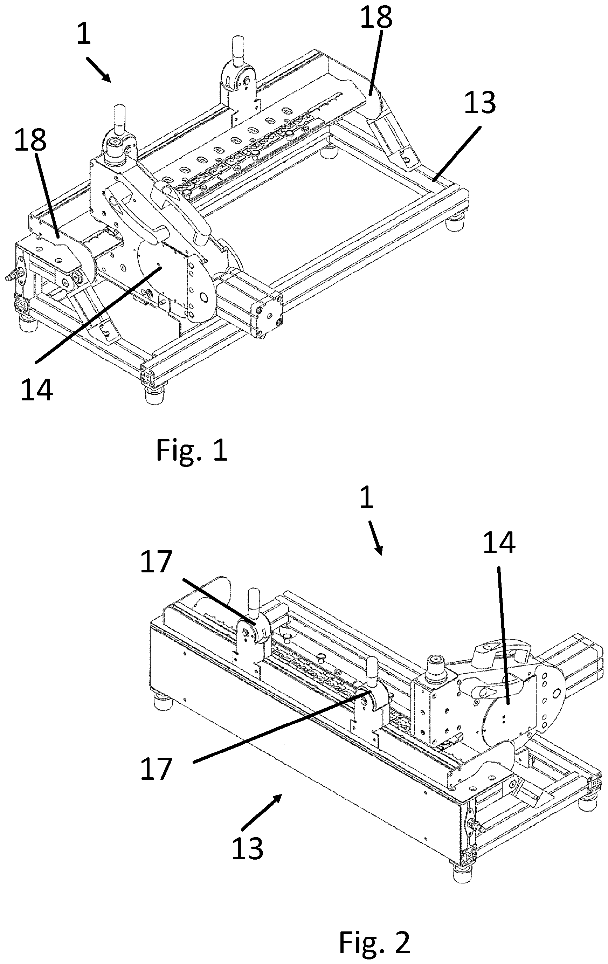

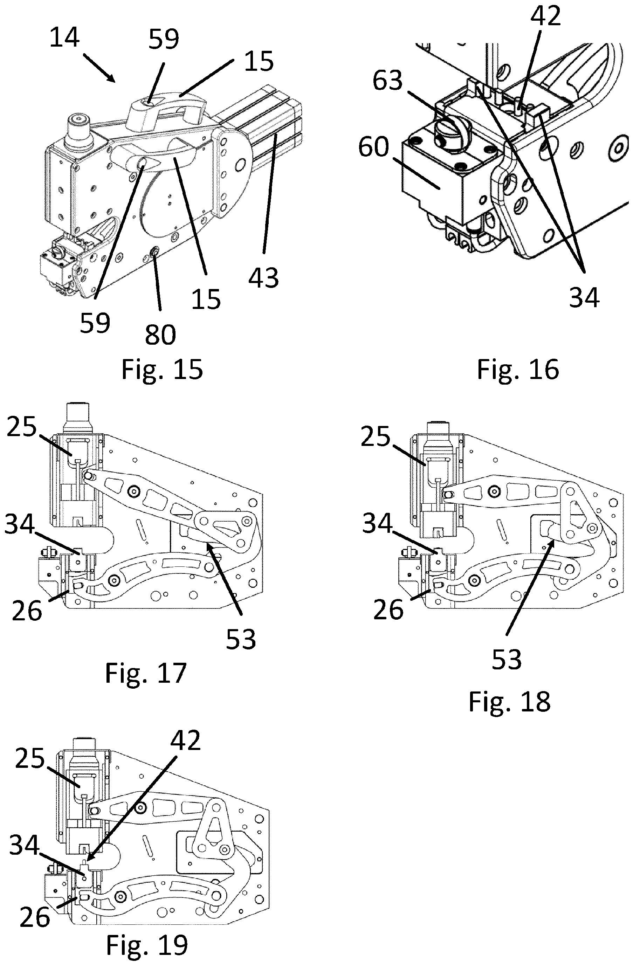

- Fig. 15: das Presswerkzeug des Befestigungsgeräts gemäß Fig. 1 in einer perspektivischen Darstellung, wie in Fig. 2,
- Fig. 16: ein Teilbereich der Fig. 15 in einer vergrößerten Ansicht,
- Fig. 17: eine Innenansicht des Presswerkzeugs gemäß Fig. 15 mit dem Einpresstempel in der Ausgangsposition und dem Anpressstempel in der Ausgangsposition,
- Fig. 18: das Presswerkzeug gemäß Fig. 17 mit dem Einpresstempel in der Endposition,
- Fig. 19: das Presswerkzeug gemäß Fig. 17 mit dem Einpresstempel in der Endposition und dem Anpressstempel in der Endposition,

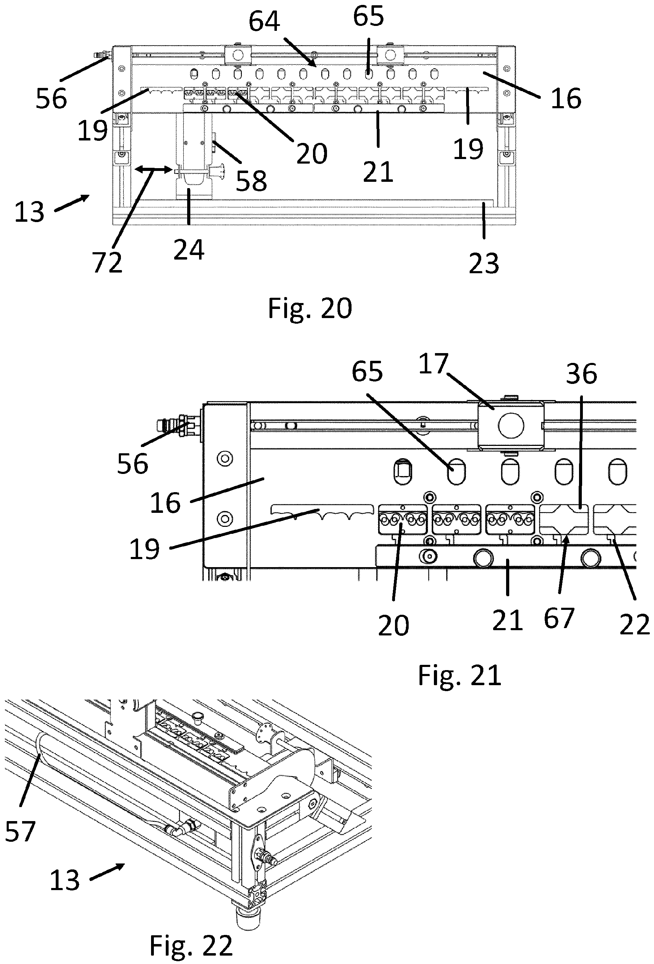

- Fig. 20: das Gestell des Befestigungsgeräts in einer Draufsicht,
- Fig. 21: ein Teilbereich der Fig. 20 in einer vergrößerten Ansicht,
- Fig. 22: ein Teilbereich des Gestells gemäß Fig. 20 in einer perspektivischen Ansicht schräg von hinten,

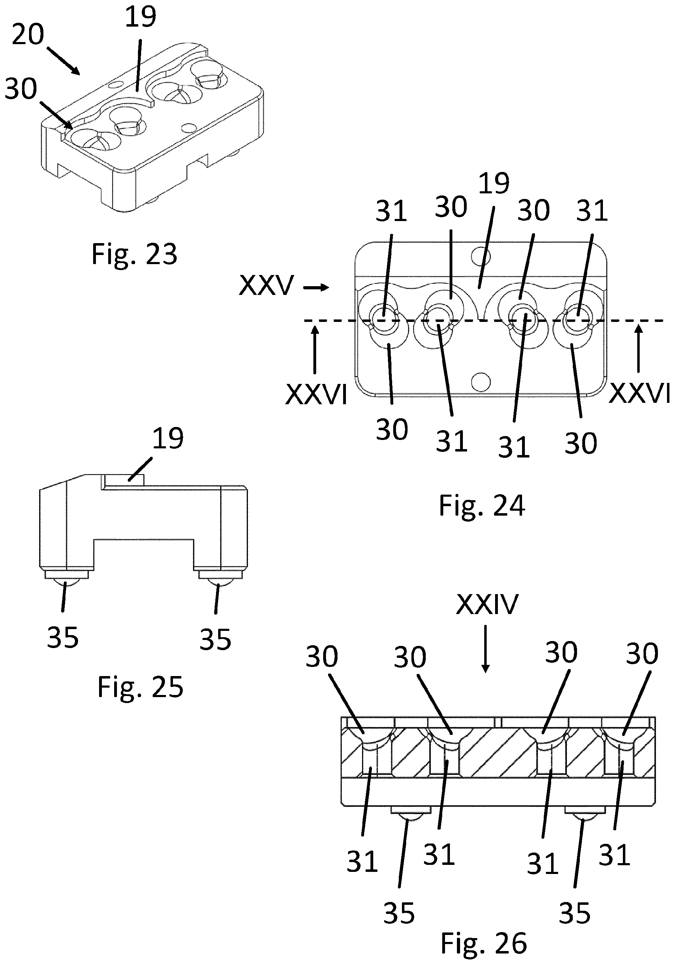

- Fig. 23: eine Umformmatrize des Befestigungsgeräts gemäß Fig. 1 in einer perspektivischen Ansicht,
- Fig. 24: die Umformmatrize gemäß Fig. 23 in einer Draufsicht gemäß dem Pfeil XXIV in Fig. 26,
- Fig. 25: die Umformmatrize in einer Ansicht gemäß dem Pfeil XXV in Fig. 24,
- Fig. 26: die Umformmatrize in einer Schnittansicht gemäß der Linie XXVI-XXVI in Fig. 24,

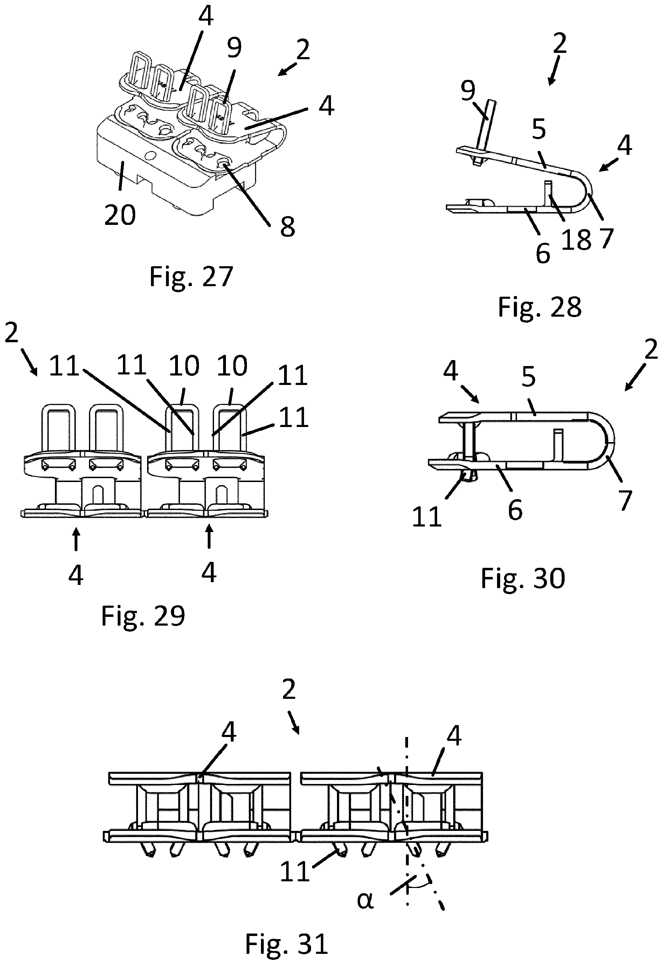

- Fig. 27: die Umformmatrize gemäß Fig. 23 mit daran angeordnetem Gurtverbinder in einer perspektivischen Ansicht,
- Fig. 28: der Gurtverbinder gemäß Fig. 27 in einem Grundzustand in einer Seitenansicht,
- Fig. 29: der Gurtverbinder gemäß Fig. 28 in einer Ansicht von vorne,
- Fig. 30: der Gurtverbinder gemäß Fig. 28 mit umgebogenen Befestigungskrampe,
- Fig. 31: der Gurtverbinder gemäß Fig. 30 in einer Ansicht von vorne,

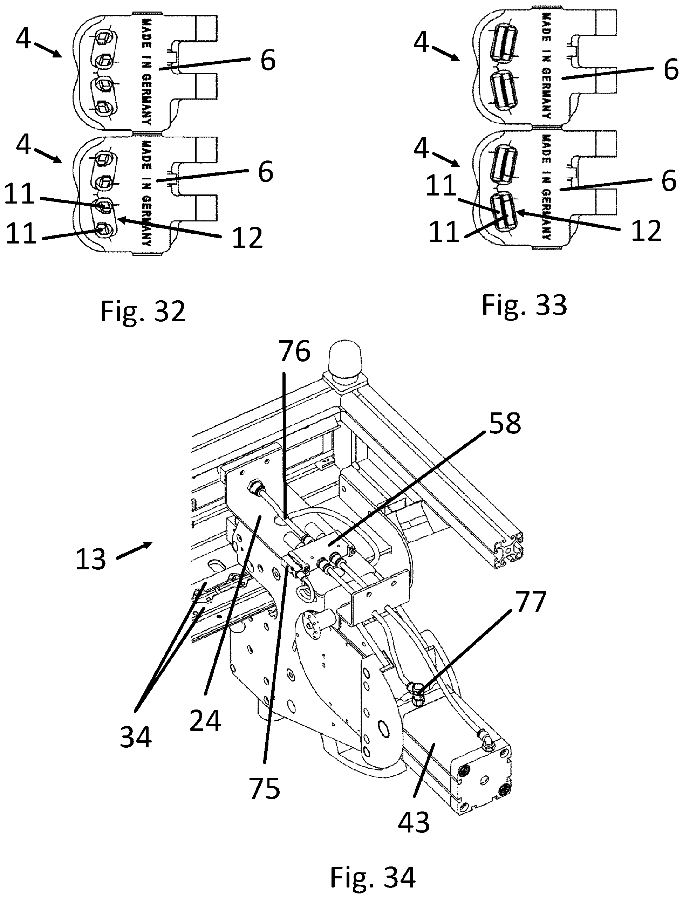

- Fig. 32: der Gurtverbinder gemäß Fig. 30 in einer Ansicht von unten,
- Fig. 33: der Gurtverbinder mit einer angepressten Befestigungskrampe in einer Ansicht von unten
- Fig. 34: ein Teilbereich des Befestigungsgeräts schräg von unten,

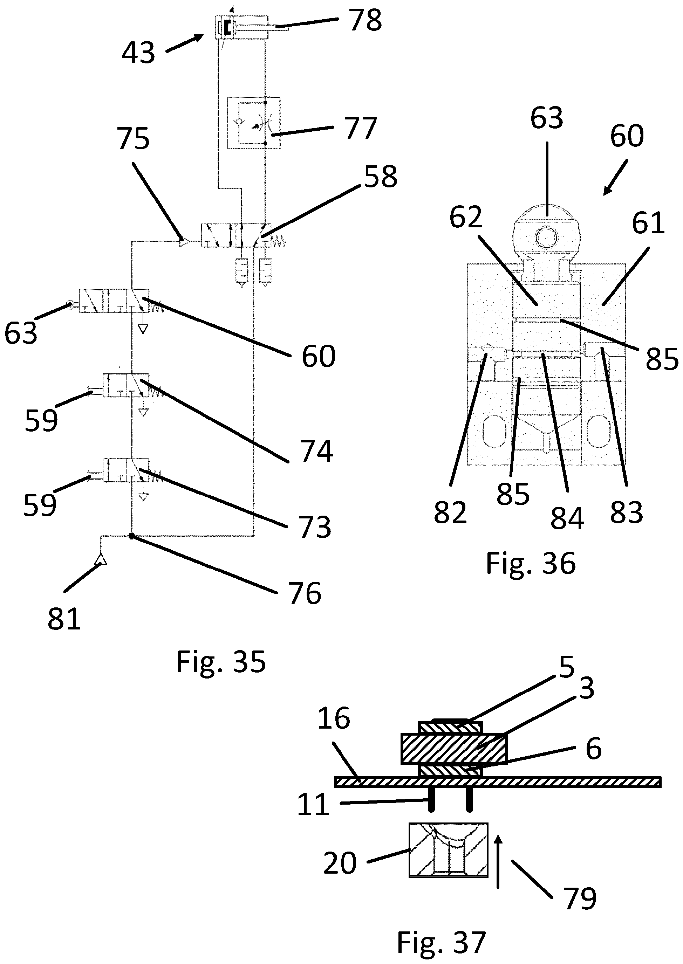

- Fig. 35: ein Pneumatikschaltplan,
- Fig. 36: eine Innenansicht eines verwendeten Ventils,
- Fig. 37: eine weitere Ausführungsform in einer schematischen Darstellung.

Die Fig. 1 und 2 zeigen ein Befestigungsgerät 1 zum Befestigen eines Gurtverbinders 2 an einem Gurtbandende 3 eines Transportgurts. Der Gurtverbinder 2 weist zumindest ein Verbinderelement 4, in der Regel mehrere in Reihe angeordnete Verbinderelemente 4, auf. Das vorliegende Befestigungsgerät 1 dient der Befestigung von Gurtverbindern 2 an Gurtbandenden 3 von Fördergurten, wobei die Fördergurte eine Stärke von 1,5 mm bis 6,4 mm aufweisen können. Dabei ist es durchaus denkbar, dass mit dem vorliegenden Befestigungsgerät 1 unterschiedliche Gurtverbindertypen, die für unterschiedliche Gurtdickenbereiche geeignet sind, befestigt werden können.

Ein Gurtverbinder 2 mit zwei in Reihe angeordneten Verbinderelementen 4 ist in den Fig. 27 bis 33 näher dargestellt. Das jeweilige Verbinderelement 4 weist einen ersten plattenförmige Schenkel 5 und einen zweiten plattenförmigen Schenkel 6 auf, wobei zwei Bogenabschnitte 7 des Verbinderelements 4 die Schenkel 5, 6 des Verbinderelements 3 miteinander verbinden. Die Verbinderelemente 4 des Gurtverbinders 2 sind im Bereich des zweiten Schenkels 6 miteinander verbunden. Der jeweilige Schenkel 5, 6 weist Durchgangslöcher 8 für Befestigungskrampen 9 zum Befestigen des Verbinderelements 4 an dem Gurtbandende 3 auf. Wie insbesondere den Fig. 28 und 29 zu entnehmen ist, sind in dem jeweiligen Verbinderelement 4, nämlich in dem oberen ersten Schenkel 5, bereits zwei Befestigungskrampen 9 eingebracht, wobei diese Befestigungskrampen 9 in den Durchgangslöchern 8 des ersten Schenkels 5 in Art einer Presspassung gehalten sind. Krampenrücken 10 der Befestigungskrampen 9 erstrecken sich vorliegend parallel zu einer Vorderkante des Gurtbandendes 3. Zwecks Befestigung der Gurtverbinder 2 an dem Gurtbandende 3 müssen die Schenkel 5, 6 geschlossen werden, sodass diese an dem Gurtbandende 3 zur Anlage kommen. Ferner müssen die Befestigungskrampen 9 durch die Durchgangslöcher 8 der beiden Schenkel 5, 6 unter Durchdringung des zwischen den Schenkeln 5, 6 des Verbinderelements 4 angeordneten Gurtbandendes 3 eingetrieben werden. Die auf der dem Gurtbandende 3 abgewandten Seite des unteren, zweiten Schenkels 6 austretenden freien Enden 11 der Befestigungskrampe 9 müssen dann umgebogen und an den zweiten Schenkel 6 angepresst werden, sodass diese um etwa 90° umgebogen sind und an dem zweiten Schenkel 6 zur Anlage kommen. Dieser finale Endzustand ist beispielhaft in der Fig. 33 gezeigt. Konkret kommen die freien Enden 11 der jeweiligen Befestigungskrampe 9 in dem finalen Endzustand in einer dieser Befestigungskrampe 9 zugeordneten Lagertasche 12 zur Anlage, sodass diese freien Enden 11 in dem Endzustand nicht gegenüber dem zweiten Schenkel 6 oder nur geringfügig gegenüber dem zweiten Schenkel 6 hervorstehen.

Zum Verbinden von zwei Gurtbandenden 3 werden an den beiden Bandenden 3 Gurtverbinder 2 befestigt. Diese Gurtverbinder 2 werden dann überlappend angeordnet, sodass die Bogenabschnitte 7 miteinander kämmen. In die kämmenden Bogenabschnitte 7 wird dann ein Verbinderstab eingeschoben zum Verbinden der Bandenden 3.

Das Befestigen des Gurtverbinders 2 an dem Gurtbandende 3 erfolgt mit dem Befestigungsgerät 1, wie es in der Fig. 1 gezeigt ist. Dieses Befestigungsgerät 1 umfasst ein Gestell 13, das in den Fig. 20 bis 22 näher dargestellt ist, und ein als Einpresszange ausgebildetes Presswerkzeug 14. Dieses Presswerkzeug 14 wird von einem Bediener des Geräts händisch geführt, wozu das Presswerkzeug 14 Handgriffe 15 aufweist. Auch der Setzvorgang, insofern das Befestigen der Verbinderelemente 4 mittels der Krampen 9, wird am Presswerkzeug 14 händisch ausgelöst Das Presswerkzeug 14 wird händisch und nicht automatisch betätigt.

Eine Lagerschiene 16 des Gestells 13 dient als Auflagefläche für das Gurtbandende 3 mit dem daran angeordneten Gurtverbinder 2. In einem oberhalb der Lagerschiene 16 ausgebildeten Rahmen ist eine in Richtung der Lagerschiene 16 zustellbare Klemmleiste angeordnet, wobei das Zustellen der Klemmleiste mittels der auf die Klemmleiste einwirkenden Klemmhebel 17 erfolgt. Mit dieser Klemmschiene kann das Gurtbandende 3 klemmend in dem Gestell 13 gehalten werden. Der Rahmen ist derart mit dem übrigen Gestell 13 verbunden ist, dass auch Gurtenden 3 auf der Lagerschiene 16 angeordnet werden können, die länger sind als die Längserstreckung der Lagerschiene 16. Zu diesem Zweck ist der Rahmen über bogenförmige Haltestreben 18 mit dem übrigen Gestell 13 verbunden ist, wobei dieser Haltestreben 18 zusammen mit der Lagerschiene 16 einen seitlich offenen und rückseitigen offenen Aufnahmebereich für das Gurtbandende 3 bilden. Unter Rückseite des Gestells 13 wird vorliegend die Seite verstanden, die dem Bediener des Presswerkzeugs 14 abzuwenden ist. Von dieser Rückseite aus wird üblicherweise der Transportgurt in das Gestell 13 und den dort gelagerten Gurtverbinder 2 derart eingeführt, sodass das Gurtbandende 3 zwischen den Schenkeln 5, 6 der Verbinderelemente 4 eingeführt wird und an einem Begrenzerelement 18 des Verbinderelements 3 zur Anlage kommt, um ein Einführen des Gurtbandendes 3 in den Bogenabschnitt 7 zu vermeiden. Da der Aufnahmebereich seitlich offen, somit nicht begrenzt ist, kann auch ein überbreites Gurtbandende 3 mit Gurtverbindern 2 bestückt werden. Zu diesem Zweck kann beispielsweise das Gestell 13 bezüglich des Gurtbandendes 3 verschoben werden, sodass über die gesamte Längserstreckung des Gurtbandendes 3 Gutverbinder 2 angebracht werden können. Um eine exakte Ausrichtung zu den bereits eingebrachten Verbinderelementen 4 bei einem noch nicht mit Gurtverbindern 2 bestückten Bereich des Gurtbandendes 3 zu gewährleiten, weist die Lagerschiene zusätzliche Anlageabschnitte auf, die mit einer zu den Verbinderelementen 4 korrespondierenden Anlagekonturen 19 versehen sind. An diesen Anlagekonturen 19 können dann bereits an dem Gurtbandende 3 befestigte Verbinderelemente 4 angelegt werden, um auf diese Weise die gleiche Teilung zu erhalten, sodass trotz Umpositionierung des Gurtbandendes 3 ein einheitliches Teilungsbild von Verbinderelementen 4 erreicht werden kann.

In der Lagerschiene 16 sind mehrere, vorliegend zwölf, als separate Bauteile ausgebildete, identische Umformmatrizen 20 in Reihe angeordnet, wobei diese Umformmatrizen 20 jeweils der Aufnahme von zwei Verbinderelementen 4 des Gurtverbinders 2 dient. In den Fig. 23 bis 26 ist eine solche Umformmatrize 20 näher dargestellt. Die Lagerschiene 16 weist als Aussparungen ausgebildete Lageraufnahmen 67 auf, in die die Umformmatrizen 20 von oben eingesetzt sind, wobei die Umformmatrize 20 an zwei mit der Lagerschiene 16 verschraubten Stützschienen 36 schwerkraftunterstützt aufliegen. Die Lageraufnahmen 67 nehmen die jeweilige Umformmatrizen 20 formschlüssig auf, sodass die Lage der Umformmatrize 20 in Längsrichtung und Querrichtung festgelegt ist. In der Fig. 20 ist die Lagerschiene 16 zum besseren Verständnis lediglich mit drei Umformmatrizen 20 bestückt. In der Fig. 1 ist die Lagerschiene 16 hingegen vollständig bestückt.

Die Umformmatrize 20 weist an ihrer Oberseite ebenfalls eine Anlagekontur 19 auf, wobei diese Kontur zu der Außenkontur der aufzunehmenden Verbinderelemente 4 korrespondiert, um die Positionierung der Verbinderelemente 4 des Gurtverbinders 2 zu erleichtern und ein Verrutschen beim Befestigen zu vermeiden. Das Zusammenwirken der Anlagekontur 19 mit den Verbinderelementen 4 wird aus der Fig. 27 ersichtlich. Zwecks Haltens der Verbinderelemente 4 in Positionen, weist das Gestell 13 zudem eine Halteleiste 21 auf, wobei diese Halteleiste 21 einen Anschlag für den Bogenabschnitt 7 des jeweiligen Verbinderelements 4 bildet. Ferner umfasst die Halteleiste 21 mehrere hakenförmige Abschnitte 22, wobei diese Abschnitte 22 durch ein seitliches Verschieben der Halteleiste 21, somit ein Verschieben in Längsrichtung der Lagerschiene 16, mit den Verbinderelementen 4 in Eingriff und außer Eingriff gebracht werden können. Wenn die hakenförmigen Abschnitte 22 der Halteleiste 21 mit den Verbinderelementen 4 in Eingriff sind, hintergreifen die Abschnitte 22 den jeweiligen Bogenabschnitt 7 des jeweiligen Verbinderelements 3 und dienen somit der Fixierung des Verbinderelements 4 in der entsprechenden Position. Ferner wird durch den hakenförmigen Abschnitt 22 der Halteleiste 21 das jeweilige Verbinderelement 4 niedergehalten, sodass es nicht von der Lagerschiene 13, respektive der Umformmatrize 20, abgehoben werden kann. Insofern bildet der hakenförmige Abschnitt 22 einen Niederhalter. Um ein Verschieben der Halteleiste 21 zu ermöglichen, ist die Halteleiste 21 mit der Lagerschiene 16 verschraubt, wobei die zugehörigen Schrauben in einem Langloch der Halteleiste 21 angeordnet sind, sodass die Halteleiste 21 seitlich verschoben werden kann. Dadurch kann die Halteleiste 21 in einfacher Art und Weise mit den Verbinderelementen 4 des Gurtverbinders 2 in Eingriff und außer Eingriff gebracht werden.

Das Gestell 13 weist zwei nicht mit der Lagerschiene 16 identische Führungsschienen 23 auf, wobei das zangenartige Presswerkzeug 14 in diesen Führungsschienen 23 entlang der Lagerschiene 16 verschiebbar gelagert ist. Dies ist durch den Doppelpfeil 72 in der Fig. 20 kenntlich gemacht. Konkret weist das Gestell 13 einen in den Führungsschienen 23 gelagerten Schlitten 24 auf, wobei das Presswerkzeug 14 an diesem Schlitten 24 befestigt werden kann. Das Presswerkzeug 14 kann somit entlang der Lagerschiene 16 und somit entlang des dort gelagerten Gurtbandendes 3 mit daran angeordnetem Gurtverbinder 2 verschoben werden.

Das Presswerkzeug 14 dient dem Befestigen des jeweiligen Verbinderelements 4 an dem Gurtbandende 3 mithilfe der in den Verbinderelementen 4 gelagerten Befestigungskrampen 9. Zu diesem Zweck weist das Presswerkzeug 14 einen mehrteiligen Einpressstempel 25 und einen mehrteiligen Anpressstempel 26 auf, wobei die Lagerschiene 16 mit den in der Lagerschiene 16 angeordneten Umformmatrizen 20 zwischen den Stempeln 25, 26 angeordnet ist. Der Einpressstempel 25 ist auf einer nach oben weisenden Vorderseite der Umformmatrize 20 angeordnet und der Anpressstempel 26 ist auf einer gegenüberliegenden Rückseite der Umformmatrize 20 und somit gegenüberliegend zu dem Einpressstempel 25 angeordnet. Zwischen der Umformmatrize 20 und dem Einpressstempel 25 ist ein Bearbeitungsbereich gebildet, wobei in dem Bearbeitungsbereich das zu bearbeitende Verbinderelement 4 mit zwischen den Schenkeln 5, 6 des Verbinderelements 4 angeordnetem Gurtbandende 3 anzuordnen ist. Der Bearbeitungsbereich des Presswerkzeugs 14 entspricht vorliegend in etwa der Breite von zwei Verbinderelementen 4, sodass mittels des Presswerkzeugs 14 gleichzeitig zwei Verbinderelement 4 mit jeweils zwei Befestigungskrampen 9 an dem Gurtbandende 3 befestigt werden können. Nach dem Befestigen der zwei Verbinderelemente 4 kann das Presswerkzeug 14 zu zwei anderen Verbinderelementen 4, welche noch nicht an dem Gurtbandende 3 befestigt sind, verschoben werden.

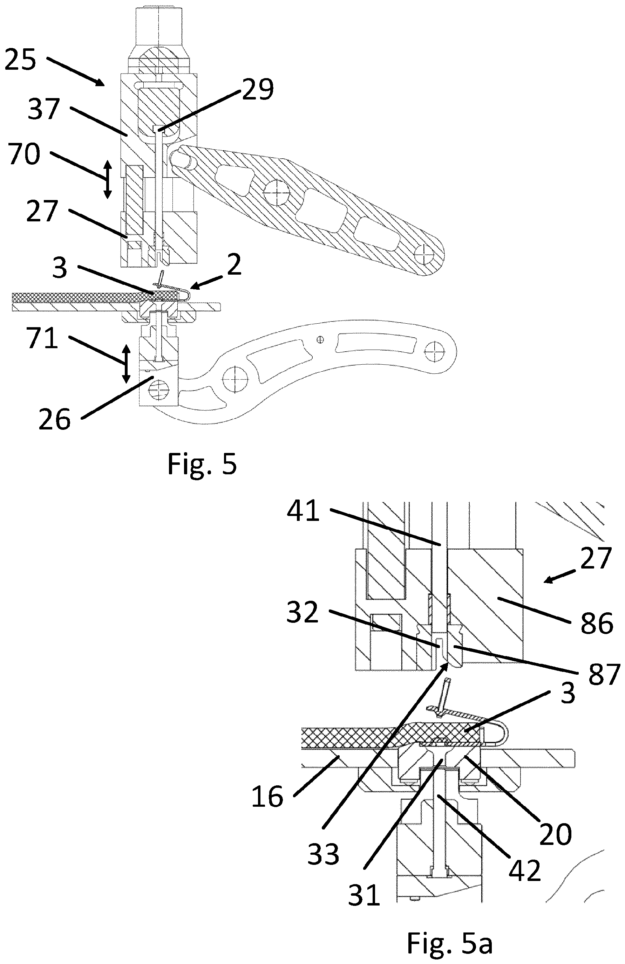

Das Befestigen der Verbinderelemente 4 mittels des Presswerkzeugs 14 ist in den Fig. 6 bis 10 und den Fig. 6a bis 10a näher dargestellt. Der Einpressstempel 25 und der Anpressstempel 26 sind jeweils von einer Ausgangsposition in eine Endposition und umgekehrt linear verfahrbar. Zu diesem Zweck sind die Stempel 25, 26 in jeweils einer Linearführung 66 geführt. Die Verfahrrichtung des Einpresstempels 25 ist in der Fig. 5 durch den Doppelpfeil 70 kenntlich gemacht. Die Verfahrrichtung des Anpressstempels 25 ist in der Fig. 5 durch den Doppelpfeil 71 kenntlich gemacht. Mittels des Einpressstempels 25 kann durch Verfahren des Einpressstempels 26 von der Ausgangsposition in die Endposition die Befestigungskrampe 9 unter Durchdringung des zwischen den Schenkeln 5, 6 des Verbinderelements 4 angeordneten Gurtbandendes 3 in die Durchgangslöcher 8 der Schenkel 5, 6 eingetrieben werden. Den Vorgang des Einpressens zeigen die Fig. 6 bis 8 und 6a bis 8a

Die Fig. 6 zeigt das Presswerkzeug in einer Offenstellung, in der sich die Stempel 25, 26 in der Ausgangsposition befinden. Wie der Fig. 6 zu entnehmen ist, sind die Schenkel 5, 6 des jeweiligen Verbinderelements 4 in dem Grundzustand noch nicht parallel zueinander ausgerichtet. Dementsprechend fluchten auch noch nicht die Durchgangslöcher 8 der Schenkel 5, 6. Daher werden zunächst, das heißt bevor mittels des Einpressstempels 25 die Befestigungskrampen 9 eingetrieben werden, die Verbinderelemente 4 geschlossen. Zu diesem Zweck ist an dem Einpressstempel 25 eine Pressbacke 27 angebracht, wobei die Pressbacke 27 bei Verfahren des Einpressstempels 25 in die Endposition, insofern in Richtung der Umformmatrize 20, vorlaufend zu dem Einpressstempel 25 angebracht ist. Beim Verfahren des Einpressstempels 25 in Richtung der Endposition kommt zunächst die Pressbacke 27 an einem freien Ende des ersten Schenkels 5 des jeweiligen Verbinderelements 4 zur Anlage und wirkt auf diesen Schenkel 5 ein, wodurch der erste Schenkel 5 an das Gurtbandende 3 angedrückt und das Verbinderelement 4 geschlossen wird. Dieser Zustand ist in der Fig. 7 und in der Fig. 7a gezeigt. Die Pressbacke 27 weist einen Lagerkörper 86 und einen in dem Lagerkörper 86 eingesetzten Einsatz 87, wobei der Einsatz 87 stufenförmig gestaltet ist, sodass der Einsatz 87 im Bereich der vorderen Kante des Schenkels 5 auf den Schenkel 5 einwirkt. Die Pressbacke 27 ist derart an dem Einpressstempel 25 gelagert, dass die Pressbacke 27 entgegen der Rückstellkraft eines als Feder ausgebildeten Rückstellmittels 28 zu dem Einpressstempel 25 linear verschiebbar ist. Durch die Verschiebbarkeit der Pressbacke 27 gegenüber dem Einpressstempel 25 können unterschiedliche Gurtdicken und unterschiedliche Verbindertypen zuverlässig bearbeitet werden. Je nach Gurtdicke und/oder verwendeten Gurtverbinder 2 federt das Rückstellmittel 28 mehr oder weniger stark ein.

Im Anschluss an das Schließen des Verbinderelements 4 werden die Befestigungskrampen 9 mittels des Einpressstempels 25 eingetrieben. Zu diesem Zweck weist der Einpressstempel 25 einen mehrteiligen Einpresskörper 29 auf, wobei dieser Einpresskörper 29 auf den Krampenrücken 10 der jeweiligen Krampe 9 einwirkt und diese unter Durchdringung des Gurtbandendes 3 in die Durchgangslöcher 8 der Schenkel 5, 6 eintreibt. Die auf der gegenüberliegenden Seite austretenden freien Enden 11 werden beim Vorgang des Einpressen an einer Umbiegestruktur 30 der stationären Umformmatrize 20 in einen Zwischenzustand umgebogen. Unter Zwischenzustand wird verstanden, dass die freien Enden 11 noch nicht in ihren finalen Endzustand überführt sind, in dem sie an dem zweiten Schenkel 6 anliegen, sondern lediglich vorgebogen sind. Dieser Zwischenzustand ist in der Fig. 8 und der Fig. 8a gezeigt. Ferner zeigen die Fig. 31 bis 33 das Verbinderelement 4 mit in dem Zwischenzustand befindlichen freien Enden 11 der Befestigungskrampe 9. Die freien Enden 11 werden beim Einpressen aufeinander zu und zueinander versetzt umgebogen um einen Winkel a, der etwa 30° beträgt. Dies ist insbesondere der Fig. 31 zu entnehmen. Da die vier Krampen 9 gleichzeitig eingetrieben werden, weist die Umformmatrize 20 auch vier Umbiegestrukturen 30 auf. Die jeweilige Umbiegestruktur 30 ist durch zwei sich überlappende, teilkugelförmige Vertiefungen gebildet, wobei die Vertiefungen in unterschiedliche Richtungen bezüglich des jeweiligen freien Endes 11 versetzt sind, wie dies aus der Fig. 24 hervorgeht. Durch diesen Versatz der Vertiefungen verläuft die jeweilige Umbiegestruktur 30 schräg zu dem Krampenrücken 10 und dementsprechend werden die freien Enden 11 auch schräg zu dem Krampenrücken 10 umgebogen. Dementsprechend sind auch die Lagertaschen 12 schräg zu den Krampenrücken 10 ausgebildet.

Das finale Umbiegen der freien Enden 11 in die Endposition erfolgt mittels Anpressstempels 26, der zu diesem Zweck von der Ausgangsposition in Richtung des Einpressstempels 25 in die Endposition verfahrbar ist. Um eine Einwirken des Anpressstempels 26 auf die freien Enden 11 der jeweiligen Krampe 9 zu ermöglichen, weist die Umformmatrize 20 vier Durchgangsöffnung 31 für den Anpressstempel 26 auf, die sich von der der Rückseite der Matrize 20 bis zur Vorderseite erstrecken und in die jeweilige Umbiegestruktur 30 münden. Dementsprechend kann durch ein Verfahren des Anpressstempels 26 in Richtung des Einpressstempels 25 der Anpressstempel 26 unter Durchdringung der Durchgangsöffnungen 31 auf die vorgebogenen freien Enden 11 der vier Befestigungskrampen 9 einwirken. Mittels des Anpressstempels 26 werden dementsprechend die freien Enden 11 in ihren Endzustand überführt, indem diese freien Enden 11 mittels des Anpressstempels 26 an den unteren Schenkel 6 angepresst werden. Diesen Zustand mit dem Presswerkzeug 14 in einer Schließstellung zeigen die Fig. 9 und 9a. Anschließend wird das Presswerkzeug 14 wieder geöffnet, indem der Einpressstempel 25 und der Anpressstempel 26 von der Endposition wieder in die Ausgangsposition verfahren werden. Diesen Zustand zeigen die Fig.10 und 10a.

Um eine besonders gute Führung der Befestigungskrampen 9 beim Eintreiben der Befestigungskrampe 9 mittels des Einpressstempels 25 zu gewährleisten, weist die Pressbacke 27 eine schlitzförmige Aussparungen 32 auf, die zur Führung der jeweiligen Befestigungskrampe 8 dient. Dies ist insbesondere den Fig. 5a und 12 zu entnehmen. Um eine sauberes Einführen der Befestigungskrampe 9 in die jeweilige Aussparung 32 zu gewährleisten, weist die Pressbacke 27 eine gewinkelt zu der Verfahrrichtung des Einpressstempels 25 ausgebildete Ablenkkante 33 auf, die beim Verfahren des Einpressstempels 25 in Richtung der Endposition mit dem Rücken 10 der Befestigungskrampe 9 zusammenwirkt.

Das Presswerkzeug 14 weist eine Stützstruktur 34 in Form von zwei beabstandeten Stützelementen auf, wobei zwischen den Stützelementen der Anpressstempel 26 ausgebildet ist. Die Stützstruktur 34 dient dem Abstützen der Umformmatrize 20 auf der dem Einpressstempel 25 abgewandten Rückseite der Umformmatrize 20 beim Vorgang des Einpressens der Befestigungskrampe 9 mittels des Einpressstempels 25. Die Umformmatrize 20 kommt allerdings erst bei Krafteinwirkung auf die Umformmatrize 20 an dieser Stützstruktur 34 zur Anlage, wie insbesondere den Fig. 11 und 12 zu entnehmen ist. Um erst bei Krafteinwirkung an der Stützstruktur 34 zur Anlage zu kommen, weist jeweilige Umformmatrize 20 elastisch verformbare Rückstellmittel 35 auf, mit dem die Umformmatrize 20 an der mit der Lagerschiene 16 verschraubten Stützschiene 36 aufliegt, wie dies insbesondere den Fig. 11 und 12 zu entnehmen ist. Bei Krafteinwirkung der Pressbacke 27 auf die Umformmatrize 20 kommt die Umformmatrize 20 unter elastischer Verformung der Rückstellmittel 35 an der Stützstruktur 34 zur Anlage, wohingegen ohne Krafteinwirkung die Umformmatrize 20 von der Stützstruktur 34 beabstandet ist, wie den Fig. 11 und 12 zu entnehmen ist. Die gestrichelte Linie 68 zwischen den Fig.11 und 12 dient lediglich als Orientierungshilfe. Bei entsprechender Wahl der Stärke der Federkräfte der Rückstellmittel 35 werden dementsprechend nur geringe Kräfte auf die Lagerschiene 16 übertragen und die beim Einpressen der Befestigungskrampe 9 wirkenden Kräfte werden über die Stützstruktur 34 im Wesentlichen in das Presswerkzeug 14 eingeleitet.

Um ein Einstellen des Einpressstempels 25 auf unterschiedliche Gurtdicken zu ermöglichen und/oder auf unterschiedliche Gurtverbinder 2 zu ermöglichen, weist der Einpressstempel 25 einen Grundkörper 37 auf, in dem der Einpresskörper 29 gelagert ist, der beim Verfahren des Einpressstempels 25 in Richtung der Umformmatrize 20 auf die Befestigungskrampen 9 einwirken. Der Einpresskörper 29 steht in Richtung der Umformmatrize 20 gegenüber dem Grundkörper 37 hervor, wobei der Einpresskörper 29 verstellbar in dem Grundkörper 37 gelagert ist zur Veränderung eines Überstands des Einpresskörpers 29 gegenüber dem Grundkörper 37. Je weiter der Einpresskörper 29 gegenüber dem Grundkörper 37 hervorsteht, desto geringer ist der Abstand zwischen dem Einpresskörper 29 und der Umformmatrize 20 in der Endposition des Einpressstempels 25. Für dünne Gurte wird dementsprechend der Einpresskörper 29 weiter in Richtung der Umformmatrize 20 verstellt als für dicke Gurte. Die beiden Endstellungen des Einpresskörpers 29 sind in den Fig. 13 und 14 gezeigt. Die gestrichelte Linie 69 zwischen den Fig.13 und 14 dient lediglich als Orientierungshilfe. Zwecks Verstellens des Einpresskörpers 29 ist der Einpresskörper 29 in den Grundkörper 37 linear geführt und wirkt mit einem drehbaren Bedienelement 38 zusammen. Dieses drehbare Bedienelement 38 weist ein Gewinde 39 auf, wobei dieses Gewinde 39 mit einem in dem Einpresskörper 29 ausgebildeten Gegengewinde zusammenwirkt. Beim Drehen des Bedienelements 38 wird das Gewinde 39 gedreht und der Einpresskörper 29 entsprechend der Gewindesteigung verschoben.

Wie den Fig. 13 und 14 zu entnehmen ist, ist der Einpresskörper 29 vorliegend nicht einteilig ausgebildet, sondern weist einen Aufnahmekörper 40 auf, wobei in diesen Aufnahmekörper 40 vier Stifte 41 eingesetzt sind, zum gleichzeitigen Einpressen der vier Befestigungskrampen 9 der Verbinderelemente 4. Auch der Anpressstempel 25 weist vier Stifte 42 zum gleichzeitigen Anpressen der umgebogenen freien Enden 11 der vier Befestigungskrampen 9 auf. Dementsprechend weist auch die jeweilige Umformmatrize 20 vier Umbiegestruktur 30 und vier Durchgangsöffnungen 31 auf.

Das Presswerkzeug 14 ist vorliegend pneumatisch betrieben, wobei das Presswerkzeug 14 zu diesem Zweck einen pneumatischen Antrieb 43 in Form eines Pneumatikzylinders aufweist zum gemeinsamen Verfahren der Stempel 25, 26. Mittels des pneumatischen Antriebs 43 wird eine innerhalb eines Gehäuses 44 des Presswerkzeugs 14 befindliche Gelenkanordnung angetrieben. Konkret weist das Presswerkzeug 14 eine mit dem Einpressstempel 25 zusammenwirkende erste Gelenkanordnung 45 mit relativ zueinander verschwenkbaren Gelenkgliedern 46, 47 auf und eine mit dem Anpressstempel 26 zusammenwirkende zweite Gelenkanordnung 48 mit relativ zueinander verschwenkbaren Gelenkgliedern 49, 50 auf. Die erste Gelenkanordnung 45 ist dabei als Kniehebel ausgebildet. Die erste und die zweite Gelenkanordnung 45, 48 sind derart miteinander gekoppelt, dass beim Verfahren der Stempel 25, 26 zwecks Anbringens der Befestigungskrampe 9 zunächst die erste Gelenkanordnung 45 eine Totpunktstellung erreicht, wobei in der Totpunktstellung die Befestigungskrampe 9 vollständig eingetrieben und die freien Enden 11 dementsprechend in den Zwischenzustand umgebogen sind. Zeitlich nachgelagert zu dem Erreichen der Totpunktstellung erfolgt das Anpressen der freien Enden 11 mittels des Anpressstempels 26. Zu diesem Zweck weist der erste Hebel 49 der zweiten Gelenkanordnung 48 der mit dem ersten Hebel 46 der ersten Gelenkanordnung 45 gekoppelt ist, eine Freilaufkontur 51 auf und ein zweiter Hebel 50 der zweiten Gelenkanordnung 48 ist in dieser Freilaufkontur 51 gelenkig und verschiebbar gelagert. Die Kinematik der Gelenkanordnungen 45, 48 ist in den Fig. 17 bis 19 dargestellt, die den Bewegungsablauf beim Schließen des Presswerkzeugs 14 zeigen. In den in den Fig. 18 und 19 gezeigten Zuständen befindet sich die erste Gelenkanordnung 45 in einer Totpunktstellung.

Der Antrieb 43 weist eine Kolbenstange 78 auf, die gelenkig mit dem ersten Hebel 46 der ersten Gelenkanordnung 45 verbunden ist, wobei ein die Antriebsstange mit dem Hebel 46 verbindendes Verbindungsmittel 52, beispielsweise ein Verbindungsbolzen, in einer gehäusefesten Führungskulisse 53 entlang einer Bahnkurve geführt ist. Durch diese Bahnkurve wird ebenfalls das zeitlich nachgelagerte Verschwenken des mit dem Anpressstempel 25 zusammenwirkenden zweiten Hebels 50 der zweiten Gelenkanordnung 48 bewirkt. Die Führungskulisse 53 weist einen Totpunktabschnitt auf, der derart gestaltet ist, dass beim Abfahren des Totpunktabschnitts, trotz Verschwenkens des ersten Hebels 46 der ersten Gelenkanordnung 45, die erste Gelenkanordnung 45 in einer Totpunktstellung verbleibt, wie dies den Fig. 18 und 19 zu entnehmen ist.

Der zweite Hebel 46 der ersten Gelenkanordnung 45, der mit dem Einpressstempel 25 gekoppelt ist, ist um eine gehäusefeste erste Schwenkachse 54 schwenkbar in dem Gehäuse 44 des Presswerkzeugs 14 gelagert und der zweite Hebel 50 der zweiten Gelenkanordnung 48, der mit dem Anpressstempel 26 gekoppelt ist, ist um eine gehäusefeste zweite Schwenkachse 55 schwenkbar in dem Gehäuse 44 des Presswerkzeugs 14 gelagert.

Die Versorgung des Presswerkzeugs 14 mit Druckluft erfolgt über das Gestell 13, wobei das Gestell 13 zu diesem Zweck einen Druckluftanschluss 56 aufweist, zum Anschließen einer Druckluftquelle 81. Der Druckluftanschluss 56 ist dabei in einem hinteren Bereich des Gestells 13 ausgebildet, sodass ein dort anzuschließender Druckluftschlauch möglichst außerhalb des für den Bediener benötigten Bereich angeordnet ist. Der Druckluftanschluss 56 ist mit einem in dem Gestell 13 geführten Schlauch 57 verbunden, wobei dieser Schlauch 57 wiederum mit dem Schlitten 24 verbunden ist. Der Schlauch 57 ist in dem Gestell 13 in einer Schleife geführt, wobei diese Schleife in etwa in der Mitte der Lagerschiene 16 angelenkt ist. Das Gestell 13 weist Profilschienen mit einer Nut auf, wobei der Schlauch 57 zumindest teilweise in den Nuten der Profilschienen geführt ist. An dem Schlitten 24 ist ein pneumatisch betätigbares Pneumatik-Ventil 58, nämlich ein 5/2-Wege-Pneumatik-Ventil, angebracht, das über den Schlauch 57 mit Druckluft versorgt wird. Bei Anliegen von Steuerluft an einem Steueranschluss 75 des Pneumatik-Ventils 58 wird das Pneumatik-Ventil 58 in eine Schaltstellung überführt, in der der doppeltwirkende Pneumatikzylinder 43 derart mit Druckluft beaufschlagt, dass der Einpressstempel 25 und der Anpressstempel 26 über die Gelenkanordnung von der Ausgangsposition in die Endposition verfahren werden. Das Presswerkzeug 14 wird dementsprechend geschlossen.

Die Steuerluft zum Schalten des Pneumatik-Ventils 58 wird an einem Abzweig 76 abgezweigt und über einen Anschluss 80 einer in dem Presswerkzeug 14 ausgebildeten pneumatischen Steuerkette zugeführt, die im Folgenden unter Bezugnahme auf den in der Fig. 35 gezeigten Pneumatikschaltplan näher erläutert. Zum Schalten des Pneumatik-Ventils 58 muss der Bediener des Presswerkzeugs 14 das Presswerkzeug 14 beidhändig bedienen, nämlich zwei an den Griffen 15 ausgebildete Knöpfe 59 niederdrücken, um jeweils ein als 3/2-Wegeventil ausgebildetes erstes Ventil 73 und ein als 3/2-Wegeventil ausgebildetes zweites Ventil 74 in eine Durchlassstellung zu überführen, damit die an einem Abzweig 76 abgezweigte Steuerluft durch die Ventile 73, 74 strömen kann. Um zu vermeiden, dass das Presswerkzeug 14 in einer falschen Position betätigt wird, weist das Presswerkzeug 14 ein drittes Ventil 60 mit einem Ventilkörper 61 und einem in dem Ventilkörper 61 zwischen einer ersten Endstellung und einer zweiten Endstellung verschiebbaren Ventilkolben 62 auf. Der Ventilkolben 62 ist federbelastet und befindet sich im Grundzustand in einer ersten Endstellung der beiden Endstellungen. In den beiden Endstellungen des Ventilkolbens 62 ist ein Betätigen des Antriebs 43 verhindert, da sich das dritte Ventil 60 dann in einer Schließstellung befindet, in der kein strömen von Steuerluft zu dem Steueranschluss 75 möglich ist. Ein Betätigen des Antriebs 43 ist nur möglich, wenn sich der Ventilkolben 62 in der Zwischenstellung befindet, die zu einer Offenstellung des dritten Ventils 60 korrespondiert. Mittels dieses dritten Ventils 60 wird sichergestellt, dass nur in zu den Umformmatrizen 20 korrespondierenden Positionen des Presswerkzeugs 14 ein Betätigen des Antriebs 43 und somit ein Verfahren der Stempel 25, 26 erfolgen kann. Zu diesem Zweck wirkt ein mit dem Ventilkolben 62 verbundenes Rad 63 mit einem entlang des Verschiebewegs ausgebildeten Abschnitt der Lagerschiene 16 zusammen, wobei dieser Abschnitt eine Strukturierung in Form eines Lochrasters 64 aufweist. In den korrekten Positionen des Einpresswerkzeugs 14 fährt das Rad 63 in das dieser Umformmatrize 20 zugeordnete Loch 65 ein, wobei das jeweilige Loch 65 derart gestaltet ist, dass sich der Ventilkolben 62 in dem in das Loch 65 eingefahrenen Zustand des Rads 63 in der Zwischenstellung befindet und dementsprechend eine Betätigung des Antriebs 43 durch Betätigung der Druckknöpfe 59 möglich ist. Diese Zwischenstellung ist in der Fig. 36 näher dargestellt. In der Zwischenstellung sind vorliegend ein Eingangskanal 82 und ein Ausgangskanal 83 des Ventilkörpers 61 über einen in dem Ventilkolben 62 ausgebildeten Verbindungskanal 84 fluidverbunden und Steuerluft kann dementsprechend durch das Ventil 60 strömen. Durch den leichten Versatz des Eingangskanals 82 zu dem Ausgangskanal 83 kann ein besonders geringer Akzeptanzbereich für die Zwischenstellung erzielt werden. Die mit den Bezugszeichen 85 bezeichneten Strukturen des Ventilkolbens 62 sind Nuten 85 für nicht näher dargestellte Dichtungsringe.

Das erste Ventil 73, das zweite Ventil 74 und das dritte Ventil 60 sind in Reihe geschaltet, sodass nur wenn alle drei Ventile 73, 74, 60 in der Durchlassstellung sind, die abgezweigte Steuerluft zu dem Steueranschluss 74 des Pneumatik-Ventils 58 strömt und das Pneumatik-Ventil 58 in die Durchlassstellung schaltet. In dem in der Fig. 35 dargestellten Pneumatikschaltplan befinden sich das erste Ventil 73, das zweite Ventil 74 und das dritte Ventil 60 in einem Grundzustand, in dem die Ventile 73, 74, 60 geschlossen sind. Das Pneumatik-Ventil 58 befindet sich in einem Schaltzustand, in dem der Pneumatik-Zylinder 43 derart mit Druckluft beaufschlagt ist, dass die Kolbenstange 78 eingefahren ist, sodass sich die Stempel 25, 26 in der Ausgangsposition befinden. Liegt Steuerluft am Steueranschluss 74 an, wird der Schaltzustand des Pneumatik-Ventils 58 geändert und der Kolben von der anderen Seite mit Druckluft beaufschlagt und die Kolbenstange 78 ausgefahren. Der Antrieb 43 wird somit betätigt. Um das Ausfahren der Kolbenstange 78 bei Betätigung des Antriebs 43 etwas zu bremsen, ist an einem Anschluss, an dem beim Ausfahren der Kolbenstange 78 Luft austritt, ein Drosselrückschlagventil 77 angebracht.

Das erfindungsgemäße Befestigungsgerät 1 ermöglicht es, ein Verbinderelement 4 in ein und derselben Position des Presswerkzeugs 14 final an dem Gurtbandende 3 zu befestigen. Es ist daher nicht notwendig, die Position des Presswerkzeugs 14 entlang des Gurtbandendes 3 zu ändern, um die freien Enden 11 der Befestigungskrampe 9 zunächst in den Zwischenzustand umzubiegen und dann an den zweiten Schenkel 6 anzupressen, insofern in den finalen Endzustand zu überführen. Die beiden Schritte, nämlich das Umbiegen und das Anpressen erfolgen somit in ein und derselben Position des Presswerkzeugs 14. Dadurch kann Zeit eingespart werden und ein besonders gutes Ergebnis der Befestigung erreicht werden.

Bei in den Figuren dargestellten Ausführungsform ist Umformmatrize 20 stationär ausgebildet, somit nicht in Richtung der freien Enden 11 verfahrbar zwecks Umbiegen der freien Enden 11. Dementsprechend ist die Umformmatrize 20 derart angeordnet, dass die freien Enden 11 beim Einpressen der Befestigungskrampe 9 mittels des Einpressstempels 25 gegen die Umbiegestruktur 30 der stationären Umformmatrize gepresst werden.

Grundsätzlich ist auch ein aktives Verfahren der Umformmatrize 20 denkbar, um die freien Enden 11 umzuformen. Dann erfolgt das Umbiegen nicht beim sondern erst im Anschluss an das Einpressen. Schematisch ist dies in der Fig. 37 dargestellt, die den Zustand nach dem Einpressen und vor dem Verfahren der Umformmatrize 20 in Richtung des Pfeils 79 zeigt. Dazu kann die Umformmatrize 20 beispielsweise verlaufend zu dem Anpressstempel 26 angebracht werden, ähnlich wie dies auch mit der Pressbacke 27 an dem Einpressstempel 25 erfolgen kann.

### Bezugszeichenliste

- 1: Befestigungsgerät
- 2: Gurtverbinder
- 3: Gurtbandende
- 4: Verbinderelement
- 5: erster Schenkel
- 6: zweiter Schenkel
- 7: Bogenabschnitt
- 8: Durchgangslöcher
- 9: Befestigungskrampen
- 10: Krampenrücken
- 11: Freies Ende
- 12: Lagertasche
- 13: Gestell
- 14: Presswerkzeug
- 15: Handgriff
- 16: Lagerschiene
- 17: Klemmhebel
- 18: Begrenzerelement
- 19: Anlagekontur
- 20: Umformmatrize
- 21: Halteleiste
- 22: Abschnitt
- 23: Führungsschiene
- 24: Schlitten
- 25: Einpressstempel
- 26: Anpressstempel
- 27: Pressbacke
- 28: Rückstellmittel
- 29: Einpresskörper
- 30: Umbiegestruktur
- 31: Durchgangsöffnung
- 32: Aussparung
- 33: Ablenkkante
- 34: Stützstruktur
- 35: Rückstellmittel
- 36: Stützschiene
- 37: Grundkörper
- 38: Bedienelement
- 39: Gewinde
- 40: Aufnahmekörper
- 41: Stift
- 42: Stift
- 43: Antrieb
- 44: Gehäuse
- 45: Erste Gelenkanordnung
- 46: Erster Hebel
- 47: Zweiter Hebel
- 48: Zweite Gelenkanordnung
- 49: Erster Hebel
- 50: Zweiter Hebel
- 51: Freilaufkontur
- 52: Verbindungsmittel
- 53: Führungskulisse
- 54: Schwenkachse
- 55: Schwenkachse
- 56: Druckluftanschluss
- 57: Schlauch
- 58: Pneumatik-Ventil
- 59: Knöpfe
- 60: Drittes Ventil
- 61: Ventilkörper
- 62: Ventilkolben
- 63: Rad
- 64: Lochraster
- 65: Loch
- 66: Linearführung
- 67: Lageraufnahme
- 68: Linie
- 69: Linie
- 70: Doppelpfeil
- 71: Doppelpfeil
- 72: Doppelpfeil
- 73: Erstes Ventil
- 74: Zweites Ventil
- 75: Steueranschluss
- 76: Abzweig
- 77: Drosselrückschlagventil
- 78: Kolbenstange
- 79: Pfeil
- 80: Anschluss
- 81: Druckluftquelle
- 82: Eingangskanal
- 83: Ausgangskanal
- 84: Verbindungskanal
- 85: Nut
- 86: Lagerkörper
- 87: Einsatz

## Patentansprüche

1. Befestigungsgerät (1) zum Befestigen eines Gurtverbinders (2) an einem Gurtbandende (3) eines Transportgurts mittels Befestigungskrampen (9), wobei der Gurtverbinder (2) zumindest ein Verbinderelement (4) mit einem ersten Schenkel (5) und einem zweiten Schenkel (6) aufweist, aufweisend:
- einen Einpressstempel (25), zum Einpressen der Befestigungskrampe (9),
- eine Umformmatrize (20) mit einer Umbiegestruktur (30), zum Umbiegen der beim Einpressen der Befestigungskrampe (9) an dem zweiten Schenkel (6) austretenden freien Enden (11) der Befestigungskrampe (9) an der Umbiegestruktur (30) in Richtung des zweiten Schenkels (6),
- einen dem Einpressstempel (25) gegenüberliegenden Anpressstempel (26), zum Anpressen der an der Umbiegestruktur (30) umgebogenen freien Enden (11) der Befestigungskrampe (9),
wobei der Einpressstempel (25) von einer Ausgangsposition in eine Endposition verfahrbar ist zum Einpressen einer Befestigungskrampe (9) in die Schenkel (5, 6), wobei der Anpressstempel (26) von einer Ausgangsposition in eine Endposition verfahrbar ist, zum Anpressen der umgebogenen freien Enden (11) an den zweiten Schenkel (6), und wobei die Umformmatrize (20) eine Durchgangsöffnung (31) für den Anpressstempel (26) aufweist.

2. Befestigungsgerät (1) nach Anspruch 1, wobei die Umformmatrize (20) stationär und derart angeordnet ist, dass die freien Enden (11) beim Einpressen der Befestigungskrampe (9) mittels des Einpressstempels (25) gegen die Umbiegestruktur (30) der stationären Umformmatrize (20) gepresst und dadurch in Richtung des zweiten Schenkels (6) umgebogen werden.

3. Befestigungsgerät (1) nach einem der Ansprüche 1 bis 2, wobei das Verfahren des Einpressstempels (25) von der Ausgangsposition in die Endposition in Richtung des Anpressstempels (26) erfolgt und das Verfahren des Anpressstempels (26) von der Ausgangsposition in die Endposition Ausgangsposition in Richtung des Einpressstempels (25) erfolgt.

4. Befestigungsgerät (1) nach einem der Ansprüche 1 bis 3, wobei der Einpressstempel (25) einen Grundkörper (37) und einen in dem Grundkörper (37) gelagerten Einpresskörper (29) aufweist, der beim Verfahren des Einpressstempels (25) von der Ausgangsstellung in die Endstellung auf die Befestigungskrampe (9), insbesondere den Krampenrücken (9), einwirkt zwecks Eintreibens der Befestigungskrampe (9), wobei der Einpresskörper (29) verschiebbar in dem Grundkörper (37) gelagert ist zur Veränderung eines Abstands des Einpresskörpers (29) von der Umformmatrize (20) in der Endposition des Einpressstempels (25), wobei der Einpressstempel (25) ein mit dem Einpresskörper (29) zusammenwirkendes Bedienelement (38) aufweist, zum Verschieben des Einpresskörpers (29) gegenüber dem Grundkörper (37).

5. Befestigungsgerät (1) nach einem der Ansprüche 1 bis 4, wobei das Befestigungsgerät (1) eine Pressbacke (27) aufweist, wobei die Pressbacke (27) in Richtung der Umformmatrize (20) vorlaufend zu dem Einpressstempel (25) an dem Einpressstempel (25) gelagert ist, wobei die Pressbacke (27) beim Verfahren des Einpressstempels (25) auf den dem Einpressstempel (25) zugewandten ersten Schenkel (5) der Schenkel (5, 6) einwirkt, zum Anpressen des ersten Schenkels (5) an das Gurtbandende (3), wobei die Pressbacke (27) entgegen der Rückstellkraft eines Rückstellmittels (28) in Richtung des Einpressstempels (25) bewegbar ist, vorzugsweise das Rückstellmittel (25) eine zwischen dem Einpressstempel (25) und der Pressbacke (27) angeordnete Feder aufweist.

6. Befestigungsgerät (1) nach Anspruch 5, wobei die Pressbacke (27) eine Aussparung (32) zur Aufnahme der Befestigungskrampe (9) aufweist, wobei beim Verfahren des Einpressstempels (25) von der Ausgangsposition in die Endposition der Einpressstempel (25) in die Aussparung (32) einfährt, wobei die Aussparung (32) eine Linearführung für die Befestigungskrampe (9) bildet beim Einpressen der Befestigungskrampe (9).

7. Befestigungsgerät (1) nach Anspruch 6, wobei die Pressbacke (27) eine gewinkelt zu der Verfahrrichtung des Einpressstempels (25) ausgebildete Ablenkkante (33) aufweist, die beim Verfahren des Einpressstempels (25) von der Ausgangsposition in die Endposition mit der Befestigungskrampe (9) einwirkt, zum Einführen der Befestigungskrampe (9) in die Aussparung (32).

8. Befestigungsgerät (1) nach einem der Ansprüche 1 bis 7, wobei der Einpressstempel (25) in einer Linearführung (66) geführt ist, zum Führen der Verfahrbewegung von der Ausgangsposition in die Endposition und umgekehrt, und/oder wobei Anpressstempel (26) eine Linearführung (66) geführt ist, zum Führen der Verfahrbewegung des Anpressstempels (26) von der Ausgangsposition in die Endposition und umgekehrt.

9. Befestigungsgerät (1) nach einem der Ansprüche 1 bis 8, wobei das Befestigungsgerät (1) eine mit dem Einpressstempel (25) zusammenwirkende erste Gelenkanordnung (45) mit relativ zueinander verschwenkbaren Gelenkgliedern (46, 47) aufweist, wobei die erste Gelenkanordnung (45) als Kniehebel ausgebildet ist, und wobei das Befestigungsgerät (1) eine mit dem Anpressstempel (26) zusammenwirkende zweite Gelenkanordnung (48) mit relativ zueinander verschwenkbaren Gelenkgliedern (49, 50) aufweist, wobei die erste und die zweite Gelenkanordnung (45, 48) derart miteinander gekoppelt sind, dass bei einem Betätigen der Gelenkanordnungen (45, 48) zwecks Verfahren der Stempel (25, 26) von der jeweiligen Ausgangsposition in die jeweilige Endposition zunächst der Einpressstempel (25) die Endposition erreicht, wobei sich die erste Gelenkanordnung (45) in der Endposition in einer Totpunktstellung befindet, und zeitlich nachgelagert der Anpressstempel (26) die Endposition erreicht.

10. Befestigungsgerät (1) nach einem der Ansprüche 1 bis 9, wobei das Befestigungsgerät (1) einen Antrieb (43) mit einer Kolben-Zylinder-Einheit aufweist und/oder eine rotierbare Welle mit einer Kopplungsstruktur aufweist zur drehmomentsübertragenden Kopplung mit einer korrespondierenden Kopplungsgegenstruktur eines externen Drehantriebs.

11. Befestigungsgerät (1) nach einem der Ansprüche 1 bis 10, wobei das Befestigungsgerät (1) ein Gestell (13) und ein Presswerkzeug (14) aufweist, wobei das Gestell (3) eine Lagerschiene (16) zum Lagern des Gurtbandendes (3) mit daran angeordnetem Gurtverbinder (2) aufweist, wobei entlang einer Längserstreckung der Lagerschiene (16) in der Lagerschiene (16) mehrere Umformmatrizen (20) ausgebildet oder angeordnet sind, wobei das Presswerkzeug (14) den Einpressstempel (25) und den Anpressstempel (26) aufweist, wobei das Gestell (13) eine nicht mit der Lagerschiene (16) identische Führungsschiene (23) aufweist, wobei das Presswerkzeug (14) entlang der Lagerschiene (16) somit entlang des Gurtbandendes (3) verschiebbar in der Führungsschiene (23) gelagert ist.

12. Befestigungsgerät (1) nach Anspruch 11, wobei die Umformmatrizen (20) als separate Bauteile ausgebildet sind, wobei die Lagerschiene (16) Lageraufnahmen (67) aufweist, wobei die Umformmatrizen (20) in den Lageraufnahmen (67) gelagert sind, wobei die Lageraufnahmen (67) zumindest im Bereich der Durchgangsöffnungen (31) der Umformmatrizen (20) wiederum Durchgangsöffnungen für den Anpressstempel (26) aufweisen.

13. Befestigungsgerät (1) nach Anspruch 12, wobei das Presswerkzeug (14) eine Stützstruktur (34) aufweist zum Abstützen der jeweiligen Umformmatrize (20) auf der dem Einpressstempel (25) abgewandten Seite der Umformmatrize (20) beim Vorgang des Einpressens der Befestigungskrampe (9) mittels des Einpressstempels (25), wobei die jeweilige Umformmatrize (20) auf einem elastisch verformbaren Rückstellmittel (35) in der Lagerschiene (16) gelagert ist, sodass bei Krafteinwirkung des Einpressstempels (25) auf die Umformmatrize (20) die Umformmatrize (20) unter Verformung des Rückstellmittels (35) an der Stützstruktur (34) zur Anlage kommt und ohne Krafteinwirkung des Einpressstempels (25) auf die Umformmatrize (20) die Umformmatrize (20) von der Stützstruktur (34) beabstandet ist.

14. Befestigungsgerät (1) nach einem der Ansprüche 11 bis 13, wobei das Presswerkzeug (14) einen pneumatischen Antrieb (43) zum Verfahren der Stempel (25, 26) aufweist, wobei das Presswerkzeug (14) ein mechanisch betätigbares Ventil (60) mit einem Ventilkörper (61) und einem in dem Ventilkörper (61) zwischen einer ersten Endstellung und einer zweiten Endstellung verschiebbaren Ventilkolben (62) aufweist, wobei in den beiden Endstellung des Ventilkolbens (62) ein Betätigen des Antriebs (43) zwecks Verfahrens der Stempel (25, 26) in die Endpositionen verhindert ist und in der Zwischenstellung zwischen den beiden Endstellungen ein Betätigen des Antriebs (43) möglich ist, wobei bei einem Verschieben des Presswerkzeugs (14) in dem Gestell (13) der Ventilkolben (62) mit einem entlang des Verschiebewegs ausgebildeten Abschnitt des Gestells (13) zusammenwirkt, wobei der Abschnitt eine Strukturierung aufweist, wobei die Strukturierung derart ausgebildet ist, dass sich der Ventilkolben (62) ausschließlich in Einpresspositionen des Presswerkzeugs (14), in denen der Anpressstempel (26) in die Durchgangöffnung (31) der Umformmatrize (20) einfahren kann, in der Zwischenposition befindet.

15. Verfahren zum Befestigen von einem Gurtverbinder (2) an einem Gurtbandende (3) unter Verwendung des Befestigungsgeräts (1) nach einem der vorigen Ansprüche, aufweisend die folgenden Verfahrensschritte:
a) Anordnen eines Verbinderelements (4) des Gurtverbinders (2) mit zwischen den Schenkeln (5, 6) des Verbinderelements (4) angeordnetem Gurtbandende (3) zwischen dem Einpressstempel (25) und der Umformmatrize (20),
b) Einpressen zumindest einer Befestigungskrampe (9) unter Durchdringung des zwischen den Schenkeln (5, 6) des Verbinderelements (4) angeordneten Gurtbandendes (3) mittels Verfahren des Einpressstempels (25) von der Ausgangsposition in die Endposition,
c) Umbiegen der austretenden freien Enden (11) der Befestigungskrampe (9) an der Umbiegestruktur (30) der Umformmatrize (20) in Richtung des zweiten Schenkels (6),
d) Anpressen der umgebogenen freien Enden (11) der Befestigungskrampe (9) an den zweiten Schenkel (6) mittels Verfahren des Anpressstempel (26) von der Ausgangsposition in die Endposition,
wobei der Verfahrensschritt d) zeitlich nach dem Verfahrensschritt c) durchgeführt wird und wobei die Verfahrensschritt b), c) und d) in ein und derselben Position des Befestigungsgeräts (1) bezüglich des Verbinderelements (4) durchgeführt werden.
